(19) Europäisches Patentamt
European Patent Office
Office européen des brevets

(11) EP 4 325 082 A1

(12) EUROPÄISCHE PATENTANMELDUNG

(43) Veröffentlichungstag:
21.02.2024 Patentblatt 2024/08

(21) Anmeldenummer: 23000096.0

(22) Anmeldetag: 07.07.2023

(51) Internationale Patentklassifikation (IPC):
F16F 9/46 (2006.01)      F16F 9/06 (2006.01)
F16F 9/34 (2006.01)      F16F 9/56 (2006.01)
B62K 25/08 (2006.01)      B62K 25/28 (2006.01)
F16F 9/48 (2006.01)      F16F 9/49 (2006.01)
F16F 9/58 (2006.01)      F16F 9/00 (2006.01)
F16F 13/00 (2006.01)      B62K 25/04 (2006.01)

(52) Gemeinsame Patentklassifikation (CPC):
F16F 9/061; F16F 9/064; F16F 9/3405; F16F 9/468;
F16F 9/56; B62K 25/08; B62K 25/28;
B62K 2025/047; B62K 2025/048; F16F 9/003;
F16F 9/48; F16F 9/49; F16F 9/585; F16F 13/007;
F16F 2230/20

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
KH MA MD TN

(30) Priorität: 12.07.2022 DE 102022002549

(71) Anmelder:
• Zimmer, Günther
77866 Rheinau (DE)

• Zimmer, Martin
77866 Rheinau (DE)

(72) Erfinder:
• Zimmer, Günther
77866 Rheinau (DE)
• Zimmer, Martin
77866 Rheinau (DE)

(74) Vertreter: Thämer, Wolfgang
Zürn & Thämer
Patentanwälte
Adalbert-Stifter-Straße 12
76275 Ettlingen (DE)

(54) **FEDER-DÄMPFER-SYSTEM UND ZWEIRADFAHRZEUG MIT FEDER-DÄMPFER-SYSTEM**

(57) Die Erfindung betrifft ein Feder-Dämpfer-System mit einem Federenergiespeicher und mit einer hierzu parallel geschalteten hydraulischen Zylinder-Kolben-Einheit, die einen Zylinder und einen innerhalb des Zylinders verschiebbaren, einen ersten Verdrängungsraum gegen einen zweiten Verdrängungsraum abgrenzenden Kolben hat sowie ein Zweiradfahrzeug mit einem derartigen Feder-Dämpfer-System. Eine außerhalb der Verdrängungsräume angeordnete hydraulische Verbindungsleitung verbindet den ersten Verdrängungsraum und den zweiten Verdrängungsraum miteinander. An der Verbindungsleitung ist ein Ausgleichsspeicher angeordnet. Außerdem ist zumindest zwischen einem der Verdrängungsräume und dem Ausgleichsspeicher ein einstellbares Drosselventil und ein parallel zu diesem geschaltetes, hochdruckseitig sperrendes Rückschlagventil angeordnet.

Mit der vorliegenden Erfindung wird die Betriebssicherheit eines Feder-Dämpfer-Systems erhöht.

Fig. 1

EP 4 325 082 A1

**Beschreibung**

Die Erfindung betrifft ein Feder-Dämpfer-System mit einem Federenergiespeicher und mit einer hierzu parallel geschalteten hydraulischen Zylinder-Kolben-Einheit, die einen Zylinder und einen innerhalb des Zylinders verschiebbaren, einen ersten Verdrängungsraum gegen einen zweiten Verdrängungsraum abgrenzenden Kolben hat sowie ein Zweiradfahrzeug mit einem derartigen Feder-Dämpfer-System.

Aus der EP 2 148 112 A1 ist ein Feder-Dämpfer-System bekannt. Sämtliche Ventile sind im Kolben und in der Kolbenstange angeordnet.

Der vorliegenden Erfindung liegt die Problemstellung zugrunde, die Betriebssicherheit eines Feder-Dämpfer-Systems zu erhöhen.

Diese Problemstellung wird mit den Merkmalen des Hauptanspruches gelöst. Dazu verbindet eine außerhalb der Verdrängungsräume angeordnete hydraulische Verbindungsleitung den ersten Verdrängungsraum und den zweiten Verdrängungsraum miteinander. An der Verbindungsleitung ist ein Ausgleichsspeicher angeordnet. Außerdem ist zumindest zwischen einem der Verdrängungsräume und dem Ausgleichsspeicher ein einstellbares Drosselventil und ein parallel zu diesem geschaltetes, hochdruckseitig sperrendes Rückschlagventil angeordnet.

Im beschriebenen Feder-Dämpfer-System liegt die Verbindungsleitung zwischen den Verdrängungsräumen außerhalb der Verdrängungsräume. An dieser Leitung ist der Ausgleichsspeicher angeschlossen. Das gesamte bei einer Hubbewegung des Kolbens aus einem der Verdrängungsräume verdrängte Volumenstrom wird in die Verbindungsleitung gefördert. In dieser Verbindungsleitung sitzt ein einstellbares Drosselventil, sodass der verdrängte Volumenstrom zumindest in einer Richtung verzögert wird. Bei einem Volumenstrom in der Gegenrichtung öffnet das Rückschlagventil, sodass das Drosselventil in dieser Richtung nur eine geringe Wirkung hat. Damit können z.B. beim Einfedern auftretende schlagartige Beanspruchungen gedämpft werden.

In der Verbindungsleitung kann ein Schaltventil mit zwei Schaltstellungen sitzen. In einer ersten Schaltstellung, einer Betriebsschaltstellung, kann der Volumenstrom das Schaltventil in zwei einander entgegengesetzte Richtungen durchströmen. In einer zweiten Schaltstellung, einer Ruheschaltstellung, ist der Durchfluss nur in einer Richtung möglich. In dieser Schaltstellung nimmt das Feder-Dämpfer-System seine ausgefahrene Grundstellung ein und behält diese bei. Ein Durchsacken des Feder-Dämpfer-Systems wird verhindert.

Weitere Einzelheiten der Erfindung ergeben sich aus den Unteransprüchen und der nachfolgenden Beschreibung schematisch dargestellter Ausführungsformen.

Figur 1:     Hinterbaudämpfer;
Figur 2:     Längsschnitt des Hinterbaudämpfers in einer Grundstellung;
Figur 3:     Längsschnitt des Hinterbaudämpfers in einer Laststellung;
Figur 4:     Zylinderkörper;
Figur 5:     Längsschnitt des Zylinderkörpers;
Figur 6:     Zylinderkörper ohne Umrisslinien;
Figur 7:     Querschnitt des Zylinderkörpers mit eingesetzten Ventilen und Bedienelementen;
Figur 8:     Kolben;
Figur 9:     Querschnitt des Kolbens mit Rückschlagelement;
Figur 10:    Ventilbaugruppe;
Figur 11:    Schnitt der Ventilbaugruppe aus Figur 10;
Figur 12:    Bodenteil;
Figur 13:    Deckelteil;
Figur 14:    Zwischendeckel;
Figur 15:    Zwischenring;
Figur 16:    Federpaket;
Figur 17:    Variante eines Ventilbaugruppe;
Figur 18:    Schnitt der Figur 17;
Figur 19:    Endlagenanschlag;
Figur 20:    Schaltplan des Hinterbaudämpfers;
Figur 21:    Gabeldämpfer;
Figur 22:    Schnitt der Figur 21;
Figur 23:    Detail der Figur 22;
Figur 24:    Alternative Ausbildung eines Endlagenanschlags.

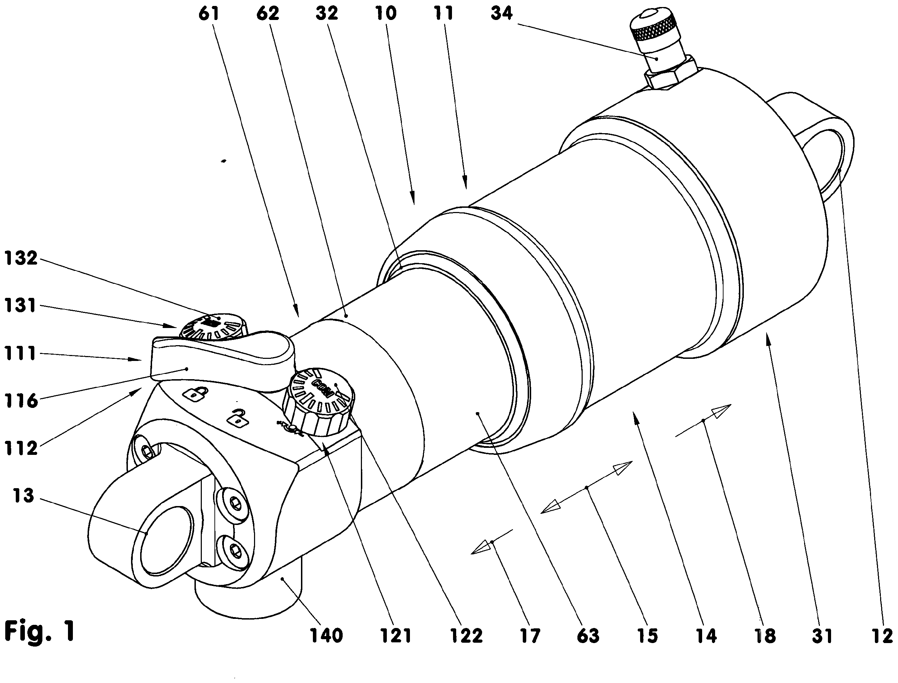

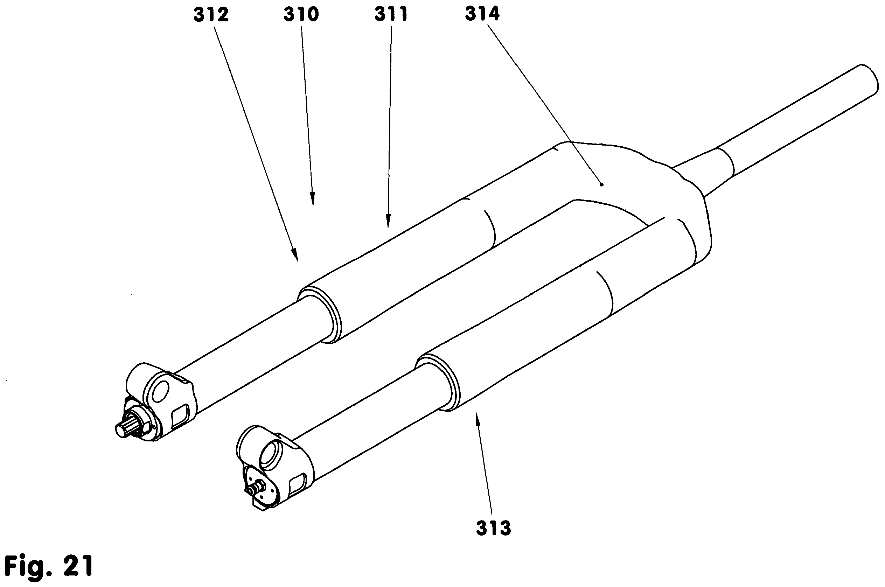

Die Figuren 1 und 21 zeigen verschiedene Bauformen von Feder-Dämpfer-Systemen (10; 310). Derartige Feder-Dämpfer-Systeme (10; 310) werden beispielsweise in Zweiradfahrzeugen, z.B. Fahrrädern, eingesetzt, um während der Fahrt die Wirkung von Fahrbahnunebenheiten auf den Fahrer zu vermindern. Diese Feder-Dämpfer-Systeme (10; 310) können im hinteren Bereich des Zweiradfahrzeugs als Hinterbaudämpfer (11), vgl. die Figuren 1 - 20 oder im vorderen Bereich des Zweiradfahrzeugs als Gabeldämpfer (311), vgl. die Figuren 21 - 24, eingesetzt werden. Auch der Einsatz in anderen Fahrzeugen ist denkbar.

Das einzelne Feder-Dämpfer-System (10; 310) wird an seinen beiden Enden an zwei relativ zueinander bewegten Bauteilen des Zweiradfahrzeuges gelagert. Bei Einsatz des Feder-Dämpfer-Systems (10) als Hinterbaudämpfer (11) sind diese beiden Bauteile beispielsweise der Rahmen und ein z.B. schwenkbar relativ hierzu gelagerter Laufradträger des hinteren Laufrades. Bei einem Einsatz als Gabeldämpfer (311) können beide Enden des Feder-Dämpfer-Systems (310) jeweils starr an den linear relativ zueinander bewegten Bauteilen des Fahrrads, z.B. am Rahmen bzw. am Laufrad, befestigt sein.

Das z.B. als Hinterbaudämpfer (11) ausgebildete, in den Figuren 1 - 16, 19, 20 dargestellte Feder-Dämpfer-System (10) hat z.B. an beiden in der Längsrichtung (15) orientierten Enden jeweils ein Schwenkauge (12; 13). Es ist auch denkbar, eines oder beide Schwenkaugen (12; 13) durch Schwenkzapfen der Schwenkzapfenaufnahmen zu ersetzen. Der Hinterbaudämpfer (11) kann ein- oder beidseitig sowohl mit Schwenkaugen (12; 13) als auch mit Schwenkzapfen oder Schwenkzapfenaufnahmen ausgebildet sein. Das jeweilige Lager- oder Befestigungselement des Hinterbaudämpfers (11) kann in einer austauschbaren Adapterkappe integriert sein.

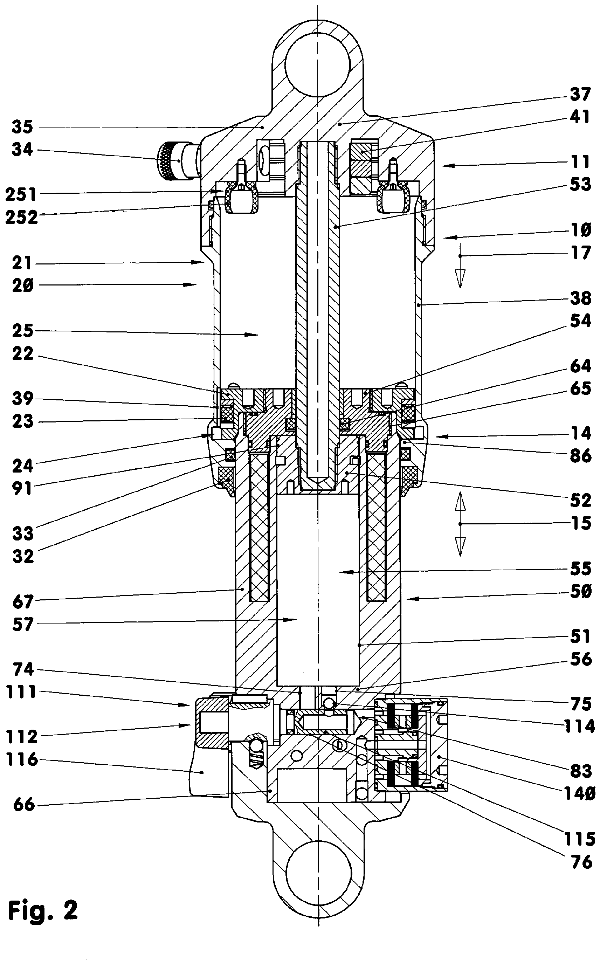

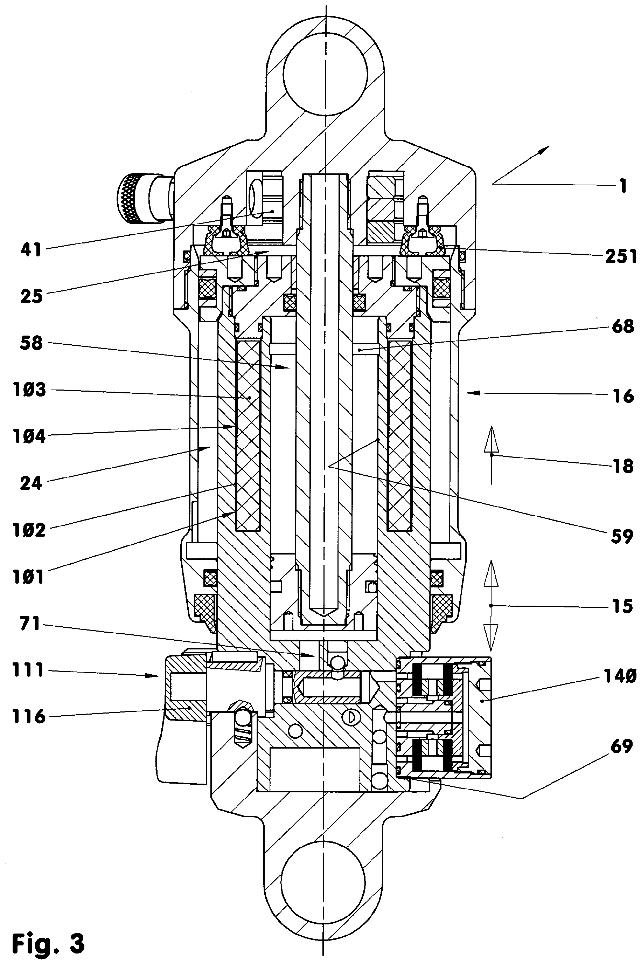

In den Figuren 1 und 2 ist der Hinterbaudämpfer (11) in einer ausgefahrenen Stellung dargestellt. Diese ausgefahrene Stellung wird im Folgenden als Grundstellung (14) des Feder-Dämpfer-Systems (10) bezeichnet. Beispielsweise hat der Hinterbaudämpfer (11) in dieser Darstellung eine Funktionslänge zwischen den Schwenkachsen der Schwenkaugen (12, 13) von 190 Millimetern. In einer Normalenebene hierzu beträgt seine maximale Ausdehnung z.B. 60 Millimeter. Der Hub des Hinterbaudämpfers (11) beträgt beispielsweise 23 % seiner Funktionslänge. Dieser Hub ist z.B. mittels Endlagenanschlägen (251) begrenzt. Die Figur 3 zeigt den Hinterbaudämpfer (11) mit seiner kürzesten Länge. Diese eingefahrene Stellung wird im Folgenden als Laststellung (16) bezeichnet.

Das Feder-Dämpfer-System (10) hat eine Zylinderbaugruppe (61) und eine Topfbaugruppe (31). Die Zylinderbaugruppe (61) und die Topfbaugruppe (31) tragen in der Darstellung der Figur 1 jeweils ein Schwenkauge (12; 13). Die Topfbaugruppe (31) ist entlang der Zylinderbaugruppe (61) in der Längsrichtung (15) verschiebbar geführt. Hierbei gleitet die Topfbaugruppe (31) mit einer Abstreifdichtung (32) und einem Quadring (33) abdichtend entlang der Mantelfläche (63) eines Zylinderkörpers (62) der Zylinderbaugruppe (61).

Die Topfbaugruppe (31) hat im Ausführungsbeispiel einen Pneumatikanschluss (34). Dieser durchdringt das Kopfteil (35) der Topfbaugruppe (31) und mündet im Druckraum (25) der Gasfeder (21). An den Pneumatikanschluss (34) ist eine externe Druckquelle anschließbar. Diese kann ein Gas, z.B. Druckluft, Stickstoff, etc. in den Druckraum (25) fördern. Der Druck des geförderten Mediums entspricht beispielsweise dem Umgebungsdruck oder ist geringfügig höher als der Umgebungsdruck. Er kann z.B. bis zu $10^6$ Pascal betragen. Der Pneumatikanschluss (34) ist selbstschließend ausgebildet, sodass nach dem Entfernen einer Pneumatikleitung zur Druckquelle der Druckraum (25) gegen die Umgebung (1) verschlossen ist.

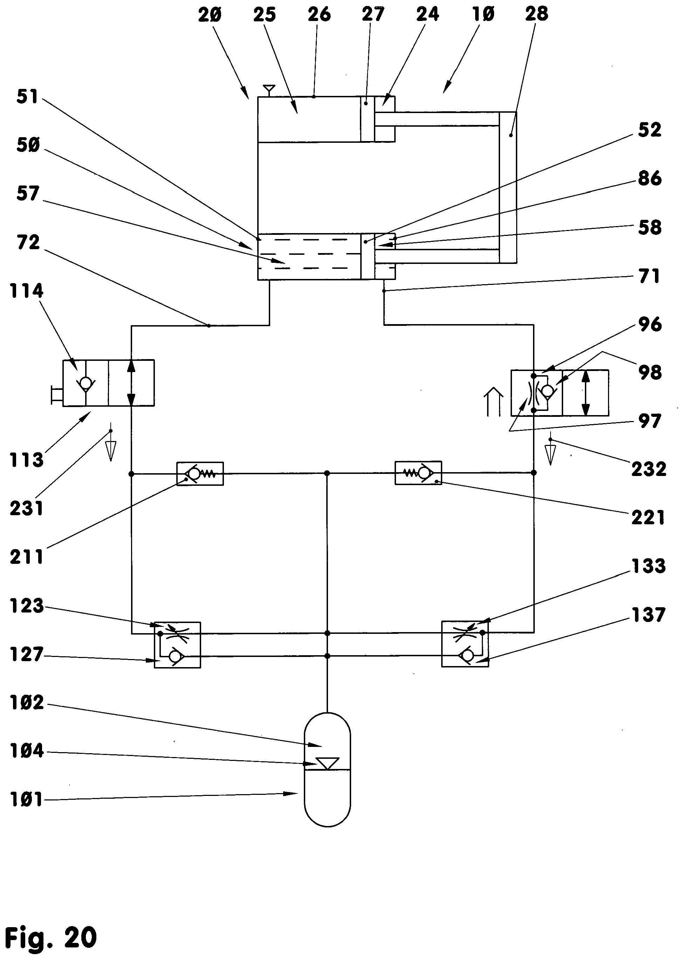

Die Zylinderbaugruppe (61) hat eine an der Außenseite des Zylinderkörpers (62) angeordneten Ventilbaugruppe (140). Auf der der Ventilbaugruppe (140) abgewandten Seite hat der Zylinderkörper (62) einen manuell betätigbaren Schalter (116) und zwei Drehknöpfe (122, 132) zur Einstellung jeweils eines extern verstellbaren Drosselelements (123; 133). Ein mittels des Schalters (116) betätigbare Schaltventil (111) hat im Ausführungsbeispiel zwei Schaltstellungen. In der in der Figur 2 dargestellten ersten Schaltstellung (112) des Schaltventils (111) ist das Feder-Dämpfer-System (10) arretiert. In einer zweiten Schaltstellung (113) des Schaltventils (111), vgl. Figur 20, ist das Feder-Dämpfer-System (10) eingeschaltet. Bei eingeschaltetem Feder-Dämpfer-System (10) ist mit einem ersten Drehknopf (122) das Verhalten des Feder-Dämpfer-Systems (10) beim Einfahren der Topfbaugruppe (31) relativ zur Zylinderbaugruppe (61) einstellbar. Hierbei ist die Hubrichtung (17) in Richtung der Laststellung (16) orientiert. Mit dem zweiten Drehknopf (132) ist das Verhalten des Feder-Dämpfer-Systems (10) beim Ausfahren der Topfbaugruppe (31) relativ zur Zylinderbaugruppe (51) einstellbar. Beim Ausfahren des Fader-Dämpfer-Systems (10) ist die Hubrichtung (18) in Richtung der Grundstellung (14) orientiert. In beiden Fällen kann das Feder-Dämpfer-System (10) auf Veränderungen der äußeren Krafteinwirkungen abhängig von den gewählten Einstellungen mit geringerer oder höherer Dämpfung reagieren.

Das Feder-Dämpfer-System (10) hat als Funktionsbaugruppen eine Zylinder-Kolbeneinheit (50) und einen Federenergiespeicher (20). Die Zylinder-Kolben-Einheit (50) weist einen Zylinder (51), einen Kolben (52) und eine Kolbenstange (53) auf. Die Kolbenstange (53) durchdringt einen Zylinderkopfdeckel (54) des Zylinders (51).

Im Zylinderinnenraum (55) trennt der Kolben (52) einen an den Zylinderboden (56) des Zylinders (51) angrenzenden ersten Verdrängungsraum (57) von einem an den Zylinderkopfdeckel (54) angrenzenden zweiten Verdrängungsraum (58). Der Kolben (52) ist an der Kolbenstange (53) befestigt, beispielsweise ist er an dieser angeschraubt. Im Ausführungsbeispiel besteht im Zylinder (51) zwischen dem Kolben (52) und der Zylinderinnenwandung (59) beispielsweise ein Spalt von 0,01 Millimeter.

Der Zylinderkopfdeckel (54) trägt eine ringförmige Dichtung (64) in der Bauform eines Quadrings, die an der Kolbenstange (53) abdichtend anliegt. An seiner Umfangsfläche hat der Zylinderkopfdeckel (54) ein Außengewinde (65), mit dem er in den Zylinderkörper (62) eingeschraubt ist. Der Zylinderkörper (62) begrenzt die Verdrängungsräume (57, 58).

Der Zylinderkörper (62) hat einen Zylindersockel (66) und einen Zylindermantel (67). Der Zylindersockel (66), der Zylindermantel (67) und der Zylinderkopfdeckel (54) umschließen den Zylinderinnenraum (55). Im Betriebszustand ist der Zylinderinnenraum (55) mit einem hydraulischen Fluid, z.B. Hydrauliköl, befüllt. Der Zylindermantel (67) hat über seine in der Längsrichtung (15) orientierte Länge eine konstante, z.B. kreisförmige Innenquerschnittsfläche. Im Zylindersockel (66) ist der Zylinderboden (56) ausgebildet. Beispielsweise kann ein im Zylindersockel (66) angeordneter Befüll- und Entlüftungsverschluss (87) eine Befüll- und Entlüftungsöffnung verschließen.

Der erste Verdrängungsraum (57) und der zweite Verdrängungsraum (58) sind mittels einer hydraulischen Verbindung (71) verbunden. Im Ausführungsbeispiel wird die hydraulische Verbindung (71) durch eine Verbindungsleitung (72) gebildet. Diese Verbindungsleitung (72) verläuft außerhalb der Verdrängungsräume (57, 58) zwischen dem Zylinderboden (56) und einer Kanalmündung (73) in der Nähe des Zylinderkopfdeckels (54). Im Ausführungsbeispiel ist die Verbindungsleitung (72) im Zylindersockel (66) und im Zylindermantel (67) ausgebildet. Die Verbindungsleitung (72) hat im Ausführungsbeispiel einen minimalen Durchmesser von 2,5 Millimeter.

Der Zylinderboden (56) hat zwei z.B. außermittig angeordnete Bodendurchbrüche (74, 75). Beide Bodendurchbrüche (74, 75) sind parallel zueinander angeordnet und münden in einen Schaltkanal (76). Hierbei sitzt in dem dem Schaltventil (111) abgewandten Bodendurchbruch (75) ein Rückschlagventil (114). Dieses Rückschlagventil (114) sperrt gegen aus dem Zylinderinnenraum (55) austretendes hydraulisches Fluid. Im Schaltkanal (76) sitzt eine Schaltwelle (115) des Schaltventils (111). Diese Schaltwelle (115) hat die zwei oben genannten Schaltstellungen (112, 113). In der ersten Schaltstellung (112) kann hydraulisches Fluid über das Rückschlagventil (114) in den ersten Verdrängungsraum (57) fließen. In der alternativen zweiten Schaltstellung (113) kann das Hydrauliköl das Schaltventil (111) in zwei einander entgegengesetzte Richtungen durchfließen.

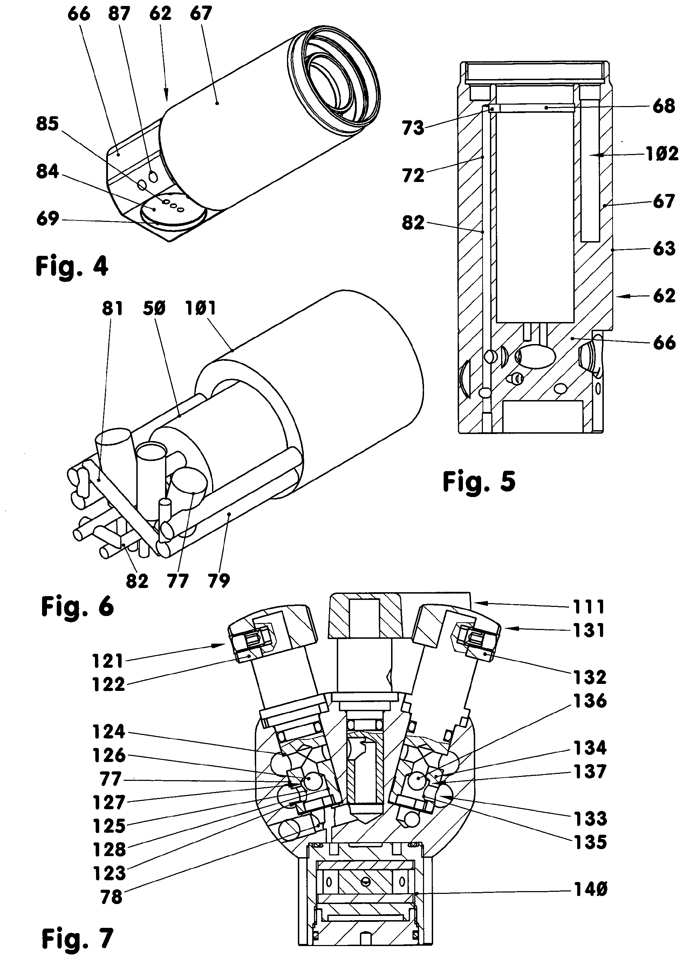

Der Schaltkanal (76) ist mit einer Aufnahmebohrung (77) einer ersten Einstellventileinheit (121) mittels eines ersten Kanals (78) verbunden, vgl. Figur 7. Dieser erste Kanal (78) ist Teil der Verbindungsleitung (72). Die erste Einstellventileinheit (121) hat ein einstellbares Drosselventil (123). Sie hat eine Einstellwelle (124), die mittels des ersten Drehknopfs (122) z.B. stufenweise verstellbar ist. Das Drosselventil (123) ist beispielsweise zwischen einer Einstellung, in der keine Drosselung erfolgt und einer hohen Drosselung des durchströmenden Hydraulikmediums einstellbar. Um eine hohe Drosselung - und damit ein härteres Federverhalten - zu erreichen, wird der Strömungsquerschnitt geringer als bei einer Einstellung für ein weiches Federverhalten eingestellt.

Die Figur 7 zeigt einen Querschnitt durch den Zylindersockel (66). Das hydraulische Medium wird vom Ausgang der Schaltwelle (115) zum stirnseitigen Eingang der Einstellwelle (124) geleitet. Hier wird das hydraulische Fluid radial in einen an der Umfangsfläche der Einstellwelle (124) liegenden Drosselkanal (125) verdrängt. Im Ausführungsbeispiel steigt die Tiefe des Drosselkanals (125) entlang des Umfangs von einem Minimum auf ein Maximum an. Beispielsweise beträgt die maximale Tiefe des Drosselkanals (125) das Zehnfache der minimalen Tiefe. Vom Drosselkanal (125) aus wird das hydraulische Medium u.a. zu einer zweiten Einstellventileinheit (131) und in eine Ausgleichsleitung (79) verdrängt.

In der Einstellwelle (124) sitzt ein Rückschlagelement (126), z.B. eine Kugel (126). In der Strömungsrichtung sitzt das Rückschlagelement (126) hinter dem Abzweig zum einstellbaren Drosselventil (123), sodass das einstellbare Drosselventil (123) und das z.B. aus der Einstellwelle (124) und dem Rückschlagelement (126) gebildete Rückschlagventil (127) hydraulisch parallel zueinander geschaltet sind. Hierbei sperrt das Rückschlagventil (127) gegen anstehenden Druck aus dem ersten Verdrängungsraum (57), z.B. beim Hub des Kolbens (52) in der Einfahr-Hubrichtung (17) in Richtung der Laststellung (16). Das Drosselventil (123) bleibt mit der eingestellten Querschnittsfläche des Drosselkanals geöffnet.

Die Ausgleichsleitung (79) führt zu einem Ausgleichsspeicher (101). Dieser ist im Zylindermantel (67) angeordnet. Der Zylinderkörper (62) hat hierfür einen im Zylindermantel (67) ausgebildeten Ausgleichsraum (102). Dieser Ausgleichsraum (102) umgreift den Zylinderinnenraum (55) koaxial zur Längsachse in einem Winkel von 340 Grad. Der Ausgleichsraum (102) hat entlang seiner in der Längsrichtung (15) des Feder-Dämpfer-Systems (10) orientierten Länge eine konstante Querschnittsfläche. Im Zylindersockel (66) sind z.B. vier parallel zueinander liegende Ausgleichsleitungen (79) angeordnet, die in den Ausgleichsraum (102) münden.

Im Ausgleichsraum (102) befindet sich als Ausgleichsvorrichtung (104) beispielsweise ein Ausgleichskörper (103). Dies ist z.B. ein Schaumstoffkörper, der beständig gegen das eingesetzte hydraulische Medium ist. Es ist auch denkbar, im Ausgleichsspeicher (101) einen Trennkolben einzusetzen. Dieser ist beispielsweise mit Stickstoff oder mittels einer mechanischen Feder druckbeaufschlagt. Der Zylinderkopfdeckel (54) verschließt den Ausgleichsraum (102).

Vom genannten ersten Drosselventil (123) führt eine Querleitung (81), vgl. Figur 6, zu der Ausgleichsleitung (79), die in der Nähe der zweiten Einstellventileinheit (131) angeordnet ist. Hier mündet die Querleitung (81) in einen Innenkanal (135) einer zweiten Einstellwelle (134). Die zweite Einstellwelle (134) ist beispielsweise so ausgebildet wie die erste Einstellwelle (124). Sie ist Teil eines Rückschlagventils (137). Der Innenkanal (135) liegt auf der Rückseite eines Rückschlagelements (136), so dass ein hier anstehender hydraulischer Druck das Rückschlagelement (136) aus seiner dargestellten Sperrlage verschiebt. Der zentrale Innenkanal (135) der Einstellwelle (134) mündet in den mantelseitigen Abschnitt (82) der Verbindungsleitung (72).

Parallel zum letztgenannten Rückschlagventil (137) ist das zweite einstellbare Drosselventil (133) geschaltet. Diese ist beispielsweise so aufgebaut wie die oben beschriebene erste einstellbare Drosselelement (123). Das zweite einstellbare Drosselventil (133) liegt zwischen dem mantelseitigen Abschnitt (82) der Verbindungsleitung (72) und dem Innenkanal (128) der ersten Einstellwelle (124). Auch hier bestehen hydraulische Verbindungen zu den Ausgleichsleitungen (79). Anstatt der beschriebenen Ventile können auch Ventileinsätze mit den genannten Funktionen im Zylinderkörper (62) angeordnet sein.

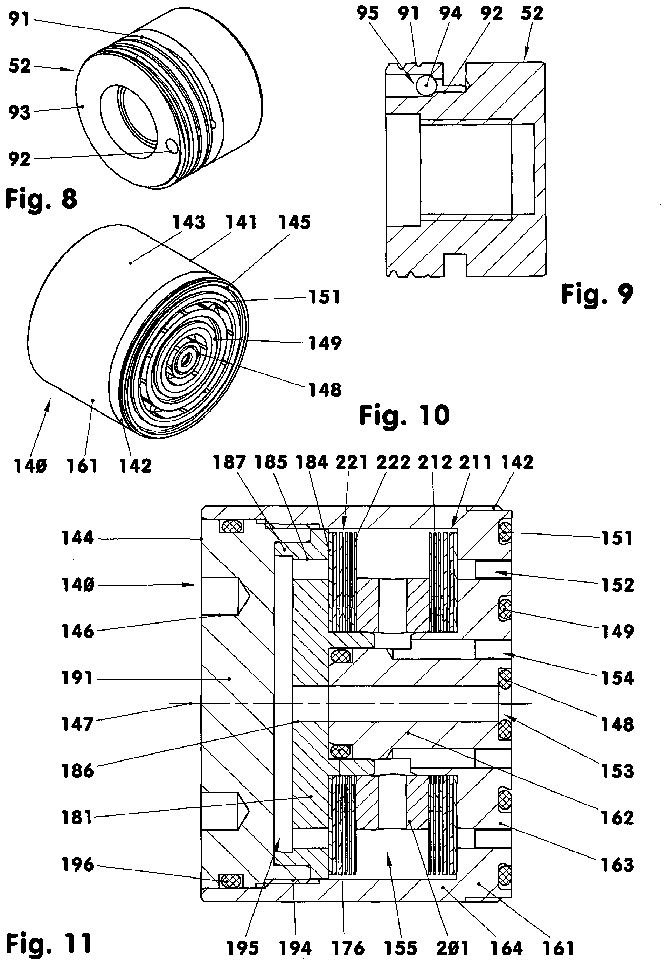

Die Kanalmündung (73) der Verbindungsleitung (72) liegt in einen Umlaufkanal (68), vgl. Figur 5. Bei ausgefahrenem Feder-Dämpfer-System (10), vgl. Figur 2, wird der Umlaufkanal (68) vom Kolben (52) verdeckt. Der Kolben (52), vgl. Figur 8, hat in seinem oberen, an die Stirnfläche (93) angrenzenden Bereich eine außenliegende Wendelnut (91). Die Wendelnut (91) liegt z.B. zwischen einer Mittenquerebene des Kolbens (52) und der Stirnfläche (93). Die Wendelnut (91) hat eine von unten nach oben zunehmende Tiefe. Beispielsweise beträgt im oberen Bereich die Tiefe der Wendelnut (91) drei Viertel ihrer Nutbreite. Ein innerhalb des Kolbens (52) angeordneter Kolbenkanal (92) verbindet das untere Ende der Wendelnut (91) mit der oberen Stirnfläche (93) des Kolbens. In diesem Kolbenkanal (92) sitzt ein Rückschlagelement (94) in der Bauform einer Kugel. Der Kolben (52) hat damit ein Kolbenrückschlagventil (95). Der Kolben (52) kann auch ohne Wendelnut (91) und/oder ohne Kolbenkanal (92) ausgebildet sein.

Vom Schaltventil (111) führt eine hydraulische Verbindung (83) zu der an der Außenseite des Zylindersockels (66) angeordneten Ventilbaugruppe (140). Die Ventilbaugruppe (140), vgl. die Figuren 10 - 16, hat z.B. ein Gehäuse (141) mit einem Außengewinde (142), das in ein Innengewinde (69) des Zylindersockels (66) eingeschraubt ist. Der Zylindersockel (66) hat eine ebene Anschlussfläche (84) zur abdichtenden Anlage der Ventilbaugruppe (140). In der Anschlussfläche (84) sind im Ausführungsbeispiel fünf Bohrungen (85) vorhanden. Diese Bohrungen (85) münden in hydraulische Kanäle innerhalb des Zylindersockels (66). Auch eine andere Befestigung der Ventilbaugruppe (140) am Zylinderkörper (62) ist denkbar.

Das Gehäuse (141) der dargestellten Ventilbaugruppe (140) ist zylinderförmig ausgebildet. Es hat einen geschlossenen Mantel (143). Eine der Stirnseiten (144, 145) ist als Montageseite (144) ausgebildet. Die andere Stirnseite (145) bildet eine Anschlussseite (145). An der Montageseite (144) sind beispielsweise vier Stiftaufnahmen (146) eingeprägt. In diese Stiftaufnahmen (146) greift bei der Montage ein Stirnlochschlüssel zur Befestigung der Ventilbaugruppe (140) am Zylinderkörper (62) ein. Die Länge der Ventilbaugruppe (140) in einer Richtung parallel zu ihrer Mittellinie (147) beträgt beispielsweise 77 % des Durchmessers der Ventilbaugruppe (140). Der Durchmesser der Ventilbaugruppe (140) beträgt beispielsweise 12 % der genannten Funktionslänge des Feder-Dämpfer-Systems (10).

Die Anschlussseite (145) trägt drei Dichtringe (148, 149, 151), die nach der Montage den Anschluss der Ventilbaugruppe (140) an den Zylinderkörper (62) abdichten. Die Dichtringe (148, 149, 151) haben untereinander die gleiche Querschnittsgeometrie und sind konzentrisch zueinander und zur Mittellinie (147) der Ventilbaugruppe (140) angeordnet. Die dargestellte Ventilbaugruppe (140) hat beispielsweise zwei Medienzuläufe (152, 153) und z.B. einen Medienauslauf (154). Die Ventilbaugruppe (140) kann auch mehrere Medienzuläufe (152; 153) und/oder mehrere Medienausläufe (154) aufweisen.

Das Gehäuse (141) der Ventilbaugruppe (140) weist im Ausführungsbeispiel ein Bodenteil (161), eine Zwischenscheibe (201), einen Innendeckel (181) und ein Deckelteil (191) auf. Das Bodenteil (161) und das Deckelteil (191) sind miteinander verschraubt und mittels eines Ringdichtelements (196) abgedichtet.

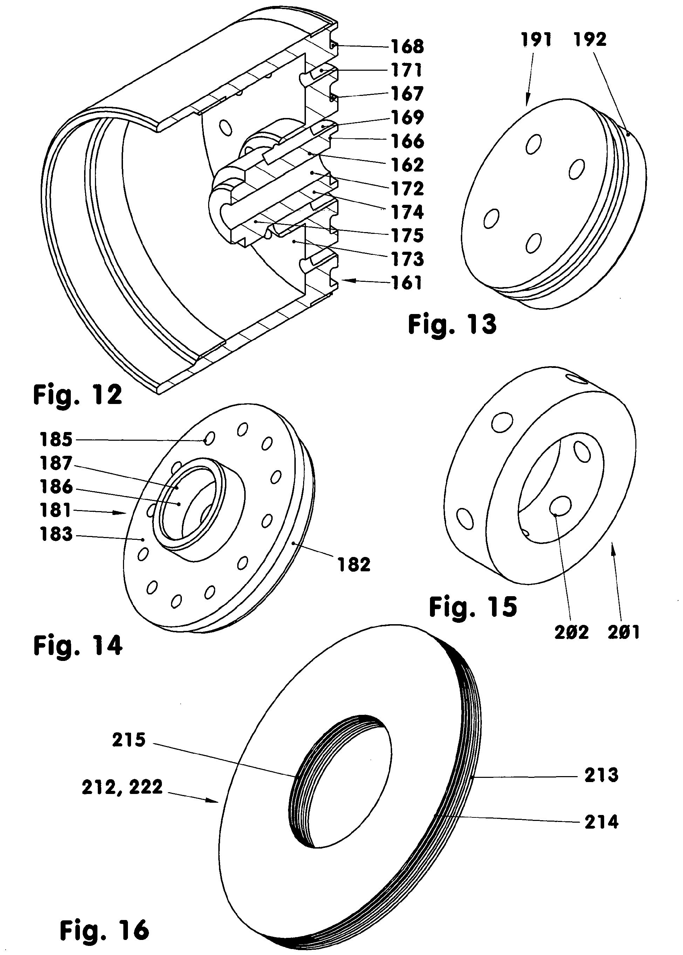

Das Bodenteil (161), vgl. Figur 12, ist topfförmig ausgebildet und hat einen zentralen Aufnahmezapfen (162). Es hat einen scheibenförmigen Anschlussflansch (163) und einen Bodenteilmantel (164). Der Bodenteilmantel (164) bildet in diesem Ausführungsbeispiel den Mantel (143) der Ventilbaugruppe (140). Der Innendurchmesser des Bodenteilmantels (164) beträgt z.B. 87 % des Durchmessers der Ventilbaugruppe (140).

Im Anschlussflansch (163) ist die außenliegende Anschlussseite (145) mit Dichtring-Aufnahmenuten (166 - 168) für die Dichtringe (148, 149, 151) ausgebildet. Außerdem sind im Anschlussflansch (163) beispielsweise 18 Durchgangsbohrungen (169, 171) ausgebildet. Diese sind in zwei zueinander konzentrischen Teilkreisen angeordnet. Beide Teilkreise liegen koaxial zu einer zentralen Aufnahmezapfenbohrung (172). Der Durchmesser der Aufnahmezapfenbohrung (172) beträgt im Ausführungsbeispiel 9 % des Durchmessers der Ventilbaugruppe (140).

Der innere Teilkreis liegt zwischen der Dichtring-Aufnahmenut (166) für den inneren Dichtring (148) und der Dichtring-Aufnahmenut (167) für den mittleren Dichtring (149). Sein Durchmesser beträgt beispielsweise 28 % des Durchmessers der Ventilbaugruppe (140). Auf diesem ersten Teilkreis sind z.B. sechs Durchgangsbohrungen (169) regelmäßig angeordnet. Jede dieser Durchgangsbohrungen (169) hat einen Bohrungsdurchmesser, der 5 % des Durchmessers der Ventilbaugruppe (140).

Der Durchmesser des äußeren Teilkreises beträgt im Ausführungsbeispiel zwei Drittel des Durchmessers der Ventilbaugruppe (140). Dieser Teilkreis liegt zwischen der Dichtring-Aufnahmenut (167) für den mittleren Dichtring (149) und der Dichtring-Aufnahmenut (168) für den äußeren Dichtring (151). Auf diesem Teilkreis sind zwölf Durchgangsbohrungen (171) äquidistant zueinander angeordnet. Der Durchmesser der einzelnen Durchgangsbohrung (171) des äußeren Teilkreises entspricht beispielsweise dem Durchmesser der einzelnen Durchgangsbohrung (169) des inneren Teilkreises.

Die Durchgangsbohrungen (171) des äußeren Teilkreises bilden im Ausführungsbeispiel den ersten Medienzulauf (152) der Ventilbaugruppe (140). Die Durchgangsbohrungen (169) des inneren Teilkreises bilden den Medienauslauf (154) der Ventilbaugruppe (140). Die zentrale Aufnahmezapfenbohrung (172) ist beispielsweise ein zweiter Medienzulauf (153) der Ventilbaugruppe (140). Die Innenseite des Anschlussflansches (163) ist als ebene Auflagefläche (173) ausgebildet. Die Auflagefläche (173) ist normal zur Mittellinie (147) der Ventilbaugruppe (140) orientiert. Die Dicke des Anschlussflansches (163) beträgt im Ausführungsbeispiel 18 % der Länge der Ventilbaugruppe (140) parallel zur Mittellinie (147).

Der Aufnahmezapfen (162) hat zwei koaxial zueinander angeordnete Abschnitte (174, 175) unterschiedlichen Durchmessers. Ein an den Anschlussflansch (163) angrenzender erster Abschnitt (174) hat einen Durchmesser von z. B. 36 % des Durchmessers der Ventilbaugruppe (140). Dieser erste Abschnitt (174) wird von den Durchgangsbohrungen (169) durchdrungen. Die Länge des ersten Abschnitts (174) parallel zur Mittellinie (147) beträgt beispielsweise 15 % der Länge der Ventilbaugruppe (140).

Aus dem ersten Abschnitt (174) des Aufnahmezapfens (162) kragt der zweite Abschnitt (175) des Aufnahmezapfens (162) heraus. Dieser hat einen Durchmesser von 28 % des Durchmessers der Ventilbaugruppe (140). Seine Länge beträgt z.B. 26 % der Länge der Ventilbaugruppe (140). Im Bereich des Übergangs des ersten Abschnitts (174) zum zweiten Abschnitt (175) münden die Durchbrüche (169) des Medienauslaufs (154) in den Ventilraum (155) der Ventilbaugruppe (140). An seinem dem Anschlussflansch (163) abgewandten Ende trägt der Aufnahmezapfen (162) einen Dichtring (176). Dieser hat beispielsweise die Bauform eines O-Rings.

Auf dem Aufnahmezapfen (162) liegt bei montierter Ventilbaugruppe (140) der Innendeckel (181). Dieser umgreift das freie Ende des Aufnahmezapfens (162) einschließlich des Dichtrings (176) mit einer Zentrierhülse (182). Die Zentrierhülse (182) ist an eine Deckelscheibe (183) angeformt. Die Deckelscheibe (183) ist als planparallele Scheibe mit kreisförmiger Grundfläche ausgebildet. Ihre in Richtung des Mediumzulaufs (152; 153) orientierte Seite hat eine ebene Auflagefläche (184). Diese Auflagefläche (184) ist beispielsweise so ausgebildet wie die Auflagefläche (173) des Bodenteils (161).

Der Innendeckel (181), vgl. Figur 14, hat beispielsweise 12 Durchbrüche (185). Diese liegen auf einem gemeinsamen Teilkreis. Der Durchmesser dieses Teilkreises entspricht beispielsweise dem Durchmesser des äußeren Teilkreises der Durchgangsbohrungen (171) des Bodenteils (161). Der Bohrungsdurchmesser der beiden Gruppen von Durchgangsbohrungen (171, 185) ist beispielsweise identisch. Eine zentrale Durchgangsbohrung (186) der Deckelscheibe (183) fluchtet bei montiertem Innendeckel (181) mit der Aufnahmezapfenbohrung (172). An seiner der Zentrierhülse (182) abgewandten Seite hat der Innendeckel (181) einen Zentrierring (187).

Die Dicke des Deckelteils (191), vgl. Figur 13, beträgt im Ausführungsbeispiel 24 % der Länge der Ventilbaugruppe (140). Er trägt an seiner Umfangsfläche (192) das Ringdichtelement (196). Auf der den Stiftaufnahmen (146) abgewandten Seite hat er einen Gewindering (194). Dieser Gewindering (194) trägt ein Außengewinde zum Einschrauben des Deckelteils (191) in ein Innengewinde des Bodenteils (161). Bei montierter Ventilbaugruppe (140) liegt zwischen dem Deckelteil (191) und dem Zwischendeckel (181) ein Verteilraum (195).

Im Ventilraum (155) sitzt zwischen dem Bodenteil (161) und dem Innendeckel (181) die Zwischenscheibe (201). Sie hat beispielsweise die Gestalt eines Zwischenrings (201). Beispielsweise sitzt der Zwischenring (201) sowohl auf dem Aufnahmezapfen (162) als auch auf der Zentrierhülse (182). Der Außendurchmesser des Zwischenrings (201) beträgt z.B. 64 % des Durchmessers der Ventilbaugruppe (140). Der Innendurchmesser beträgt z.B. 36 % dieses Bezugsdurchmessers. Die Länge des Zwischenrings (201) parallel zur Mittellinie (147) beträgt im Ausführungsbeispiel 24 % der Länge der Ventilbaugruppe (140). In radialer Richtung durchdringen z.B. sechs Radialbohrungen (202) den Zwischenring (201), vgl. Figur 15. Alle Radialbohrungen (202) liegen in einer gemeinsamen Normalenebene zur Mittellinie (147) der Ventilbaugruppe (140). Der Durchmesser der einzelnen Radialbohrung (202) beträgt z.B. 7 % des Durchmessers der Ventilbaugruppe (140).

Zwischen dem Bodenteil (161) und dem Zwischenring (201) und zwischen dem Zwischenring (201) und dem Innendeckel (181) ist jeweils ein Federpaket (212, 222) eingespannt. Die beiden Federpakete (212, 222), vgl. Figur 16, sind beispielsweise identisch zueinander ausgebildet und spiegelbildlich z.B. zur Mittenebene der Radialbohrungen (202) angeordnet.

Das einzelne Federpaket (212; 222) hat beispielsweise sechs Federscheiben (213, 214) und vier Abstandsscheiben (215). Bei montierter Ventilbaugruppe (140) sitzt ein erstes Federpaket (212) auf dem ersten Abschnitt (174) des Aufnahmezapfens (162). Das zweite Federpaket (222) sitzt auf der Zentrierhülse (182) des Innendeckels (181).

Alle Federscheiben (213, 214) haben beispielsweise den gleichen Außendurchmesser. Dieser beträgt z.B. 86 % des Durchmessers der Ventilbaugruppe (140). Es ist aber auch denkbar, einzelne Federscheiben (213, 214) mit unterschiedlichen Außendurchmessern einzusetzen. Die Federscheiben (213, 214) haben unterschiedliche Dicken. So haben im Ausführungsbeispiel die an die jeweilige Auflagefläche (173; 184) angrenzenden ersten drei Federscheiben (213) die doppelte Dicke der übrigen Federscheiben (214). Die Dicke der dickeren Federscheiben (213) beträgt beispielsweise 0,2 Millimeter. Der Mindestdurchmesser der ersten an der Auflagefläche (173; 174) anliegenden Federscheibe (213; 214) entspricht der Summe des Durchmessers des jeweiligen Teilkreises und des Durchmessers einer der Durchgangsbohrungen (171). Die Federscheiben (213, 214) können aus unterschiedlichen Werkstoffen hergestellt sein.

Zwischen der zweiten und dritten Federscheibe (213, 213), der dritten und vierten Federscheibe (213, 214), der vierten und fünften Federscheibe (214, 214) sowie der fünften und sechsten Federscheibe (214, 214) sind die Abstandsscheiben (215) angeordnet. Der Durchmesser der einzelnen Abstandsscheibe (215) beträgt im Ausführungsbeispiel 63 % des Durchmessers einer Federscheibe (213; 214). Die Dicke der einzelnen Abstandsscheibe (215) beträgt z.B. drei Viertel der Dicke der dickeren Federscheiben (213).

Bei montierter Ventilbaugruppe (140) ist der erste Medienzulauf (152) dem Schaltventil (111) nachgeschaltet. Die Federpakete (212, 222) schließen zunächst die Ventilbaugruppe (140). Bei einer Fahrt des Zweiradfahrzeuges abseits befestigter Wege entstehen stoßartige äußere Belastungen des Feder-Dämpfer-Systems (10). Bei einem Einfedern des Hinterbaudämpfers (11) drückt das hydraulische Medium in einer ersten Strömungsrichtung (231) auf das erste Federpaket (212). Die Auslenkung dieses Federpakets (212) ist abhängig von seinem Aufbau und abhängig vom anstehenden hydraulischen Druck. Die Ventilbaugruppe (140) weist damit ein erstes Druckventil (211) auf. Dies ist ein druckabhängiger Mengenregler (211). Der Druckabhängige Mengenregler (221) hat die Bauform eines federbelasteten druckabhängigen Drosselventils. Die einzelnen Federscheiben (213, 214) bilden Strömungskörper, die über die Veränderung des Strömungsquerschnitts den Volumenstrom des hydraulischen Fluids erhöhen oder drosseln. Die einzelnen Federscheiben (213, 214) sind in Reihe geschaltet.

Nach dem Passieren des ersten Federpakets (212) wird das hydraulische Medium in die Radialkanäle (202) und durch den Medienauslauf (154) in den Zylinderkörper (62) verdrängt. Innerhalb des Zylinderkörpers (62) wird das hydraulische Fluid in den zweiten Verdrängungsraum (58) und in den Ausgleichsspeicher (101) verdrängt. Bei einer Verminderung der Belastung des Federpakets (212) schließt das Druckventil (211).

Bei einer Entlastung des Feder-Dämpfer-Systems (10) wird der Kolben (52) relativ zum Zylinder (51) in der Ausfahr-Hubrichtung (18) in Richtung des Zylinderkopfes (86) verfahren. Der zweite Verdrängungsraum (58) wird komprimiert. Hydraulisches Fluid wird durch die Verbindungsleitung (72) zur zweiten Einstellventileinheit (131) und zum zweiten Medienzulauf (153) der Ventilbaugruppe (140) verdrängt. In der Ventilbaugruppe (140) wird das hydraulische Medium durch die Aufnahmezapfenbohrung (172) hindurch in den Verteilraum (195) geschoben. Das hydraulische Fluid belastet das zweite Federpaket (222). Dieses zweite Federpaket (222) sperrt im unbelasteten Zustand eine hydraulische Verbindung zwischen dem zweiten Medienzulauf (153) und dem Medienauslauf (154) der Ventilbaugruppe (140).

Bei einer Belastung des zweiten Federpaketes (222) in der zweiten Strömungsrichtung (232) wird das zweite Federpaket (222) in Abhängigkeit des anstehenden hydraulischen Drucks verformt. Das zweite Federpaket (222) bildet zusammen mit dem Gehäuse (141) ein zweites Druckventil (221). Die zweite Strömungsrichtung (232) ist beispielsweise entgegengesetzt zur ersten Strömungsrichtung (231) orientiert. Die beiden Federpakete (212, 222) - und damit die beiden druckabhängigen Mengenregler (211, 221) sind gegenläufig geschaltet. Mit zunehmenden Druck wird das einzelne Druckventil (211; 221) weiter geöffnet. Der Volumenstrom durch den druckabhängigen Mengenregler (211; 221) nimmt zu. Die Wiederherstellung eines Kräftegleichgewichts zwischen den inneren Kräften des Feder-Dämpfer-Systems (10) und den von außen auf das Feder-Dämpfer-System (10) einwirkenden äußeren Kräften wird beschleunigt. Die Sprungantwort auf eine Änderung einer äußeren Kraft hat eine hohe Dämpfungsrate.

Bei einer geringen Änderung der äußeren Kraft, z.B. beim Fahren auf ebener oder leicht welliger Fahrbahn, bleiben die beiden Druckventile (211, 221) sowohl beim Einfedern als auch beim Ausfedern geschlossen. Der Volumenausgleich erfolgt nur durch die Verbindungsleitung (72) und gegebenenfalls durch die Einstellventileinheiten (121, 131).

Um das Reaktionsverhalten der Ventilbaugruppe (140) bei auftretenden Stoßbeanspruchungen zu verändern, kann das einzelne Federpaket (212; 222) ausgetauscht oder modifiziert werden. Hierzu wird die Ventilbaugruppe (140) durch Abschrauben des Deckelteils (191) geöffnet und der Innendeckel (181) sowie das zweite Federpaket (222) herausgenommen. Nach dem Herausziehen des Zwischenrings (201) kann das erste Federpaket (212) ausgetauscht werden. Zur Modifikation ist es auch denkbar, einzelne Federscheiben (213; 214) und/oder Abstandsscheiben (215) auszutauschen, zu entnehmen oder hinzuzufügen. In der Folge kann die Sprungantwort des Feder-Dämpfer-Systems (10) beim Einfedern z.B. härter ausgebildet sein als beim Ausfedern.

Die Ventilbaugruppe (140) kann als Ganzes ausgetauscht werden. Hierzu wird die bisherige Ventilbaugruppe (140) vom Zylinderkörper (62) abgeschraubt. Anschließend wird eine neue Ventilbaugruppe (140), die die gleiche Anschlussgeometrie aufweist, in den Zylinderkörper (62) eingeschraubt.

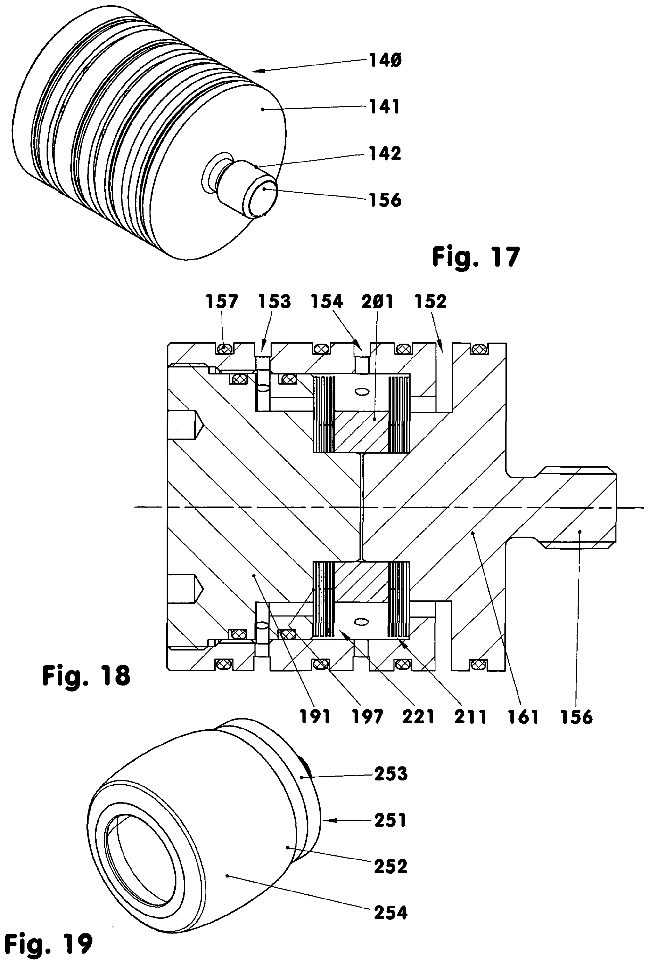

Die Figuren 17 und 18 zeigen eine alternative Ausführungsform einer Ventilbaugruppe (140). Diese Ventilbaugruppe (140) ist zylindrisch aufgebaut und trägt einen stirnseitigen Befestigungszapfen (156). In diesem Ausführungsbeispiel ist das Außengewinde (142) zur Befestigung der Ventilbaugruppe (140) am Zylinderkörper (62) am Befestigungszapfen (156) ausgebildet.

Die in diesen Figuren 17 und 18 dargestellte Ventilbaugruppe (140) hat ein Gehäuse (141), das ein Bodenteil (161), ein Deckelteil (191) und einen Zwischenring (201) aufweist. An ihrem Mantel (143) hat die Ventilbaugruppe (140) vier Dichtringe (157). Diese grenzen einen ersten Medienzulauf (152), einen zweiten Medienzulauf (153) und einen Medienauslauf (154) voneinander ab. Die beiden Medienzuläufe (152, 153) und der zwischen diesen liegende Medienauslauf (154) sind radial orientiert.

Die Ventilbaugruppe (140) dieses Ausführungsbeispiels hat zwei Federpakete (212, 222). Diese sind beispielsweise so ausgebildet, wie im Zusammenhang mit dem ersten Ausführungsbeispiel beschrieben. Im unbelasteten Zustand liegt das dem ersten Medienzulauf (152) nachgeschaltete erste Federpaket (212) an einer Auflagefläche (173) des Bodenteils (161) an. Das zweite Federpaket (222) liegt an einer Auflagefläche (197) des Deckelteils (191) an. Beide druckabhängige Mengenregler (211, 221) sperren im unbelasteten Zustand gegen die jeweilige Druckseite. Im Fahrbetrieb des Zweiradfahrzeugs reagieren die druckabhängigen Mengenregler (211, 221), wie oben beschrieben.

Der Kopfteil (35) der Topfbaugruppe (31), vgl. die Figuren 1 - 3, ist topfförmig ausgebildet. Er hat einen z.B. obenliegenden Topfboden (37) und einen in Längsrichtung (15) des Feder-Dämpfer-Systems (10) orientierten Topfmantel (38). Die Länge des Topfmantels (38) beträgt beispielsweise 34 % der Länge des Feder-Dämpfer-Systems (10). Der Topfmantel (38) trägt den Quadring (33) und den Abstreifer (32).

Der Zylinderkopfdeckel (54) ist von einem Kopfring (22) umgeben. Dieser ist Teil der mit dem Zylinder (51) der Zylinder-Kolben-Einheit (50) fest verbundenen Baugruppe des Federenergiespeichers (20). Der Kopfring (22) trägt ein Dichtelement (23), an dem der Topfmantel (38) anliegt. Das Dichtelement (23) begrenzt den Druckraum (25) des Federenergiespeichers (20). Beispielsweise ist das Dichtelement (23) so ausgebildet wie der Quadring (33). Zwischen den beiden Dichtelementen (23, 33) befindet sich ein Unterdruckraum (24) des als Gasfeder (21) ausgebildeten Federenergiespeichers (20). Dieser hat in der Darstellung der Figur 2 - bei ausgefedertem Feder-Dämpfer-System (10) - sein minimales Volumen. In diesem Grundzustand ist der Federenergiespeicher (20) entladen. Bei eingefedertem Feder-Dämpfer-System, vgl. Figur 3, hat der Unterdruckraum (24) sein maximales Volumen. Der Federenergiespeicher (20) ist komprimiert und geladen. Während der einfahrenden Hubbewegung wird beispielsweise der Gasdruck im Unterdruckraum (24) vermindert. Dies kann die Verzögerungswirkung des Feder-Dämpfer-Systems (10) erhöhen.

Beispielsweise in der Innenwandung des Topfmantels (38) ist ein Ausgleichskanal (39) vorgesehen. Dieser überbrückt bei ausgefedertem Feder-Dämpfer-System (10) das am Topfmantel (38) anliegende Dichtelement (23). Es ist auch denkbar, den Ausgleichskanal (39) in den Zylindermantel (67) einzuprägen. Beispielsweise überbrückt er dann in oder nahe dieser Endlage das am Topfmantel (38) gelagerten Dichtelement (33) und den Abstreifer (32). In oder nahe der Grundstellung (14) verbindet er dann den Unterdruckraum (24) mit der Umgebung (1).

Im Topfboden (37) sitzen z.B. drei Volumenscheiben (41). Dies sind beispielsweise Kunststoff- oder Metallplatten, die das Gasvolumen im Druckraum (25) reduzieren. Die Volumenscheiben (41) können austauschbar oder entnehmbar sein.

Im Topfboden (37) sind im Ausführungsbeispiel z.B. zwei Endlagenanschläge (251) befestigt. Auch der Einsatz eines einzigen Endlagenanschlags (251) oder von mehr als zwei Endlagenanschlägen (251) ist denkbar. Die Endlagenanschläge (251) zeigen in der Längsrichtung (15) in Richtung des Zylinderkopfes (86). Es ist entgegen einer der Hubrichtungen (17; 18) des Kolbens (52) orientiert.

Die Figur 19 zeigt einen einzelnen Endlagenanschlag (251) in einer isometrischen Darstellung. Der Endlagenanschlag (251) ist topfförmig ausgebildet. Er weist ein Elastomerelement (252) auf. Dieses hat einen Befestigungsbereich (253) und einen Verformungsbereich (254). Die in der Längsrichtung (15) orientierte Länge des Elastomerelements (252) beträgt beispielsweise 7 Millimeter. Der Verformungsbereich (253) hat eine tonnenförmige Hüllkontur. Der maximale Durchmesser des unverformten Elastomerelements (252) beträgt beispielsweise 7 Millimeter. Im verformten Zustand kann die Länge auf weniger als 65 % der Ausgangslänge verringert sein. Im Ausführungsbeispiel beträgt die Restlänge des verformten Elastomerelements (252) 57 % der Ausgangslänge. Der maximale Durchmesser weitet sich hierbei um mehr als 10 % des genannten Ausgansdurchmessers des unverformten Elastomerelements (252). Im Ausführungsbeispiel ist der maximale Durchmesser des verformten Elastomerelements (252) um 14 % größer als der maximale Durchmesser des unverformten Elastomerelements (252).

Der Werkstoff des einzelnen Endlagenanschlags (251) ist beispielsweise ein thermoplastisches Polyesterelastomer (TPC). Dies ist ein thermoplastisches Elastomer auf Copolyester-Basis. Die Härte des Werkstoffs liegt beispielsweise zwischen 15 Shore D und 85 Shore D, z.B. zwischen 35 Shore D und 60 Shore D. Der Werkstoff ist resistent gegen Öle, Fette, etc. Der Endlagenanschlag (251) kann damit alternativ oder zusätzlich in der Zylinder-Kolben-Einheit (50) eingesetzt werden. Die Energieaufnahme pro Hub beträgt beispielsweise zwischen 0,2 Joule und 0,6 Joule. Kurzzeitig ist z.B. eine um 30 % erhöhte Energieaufnahme möglich.

Für jede der beiden Hubrichtungen (17, 18) des Feder-Dämpfer-Systems (10) können die Elastomerelemente (252) separat ausgelegt werden. Für die Elastomerelemente (252) einer Hubrichtung (17; 18) gilt jeweils:

$$15 < \Sigma V_{EK} / (\Sigma A_{HV} * K_{EK}) < 200$$

mit

$V_{EK}$: Volumen eines Elastomerelements (252) [mm$^3$]
$A_{HV}$: minimale Querschnittsfläche der hydraulischen Verbindung (71) im ungedrosselten Zustand [mm$^2$]
$K_{EK}$: Kompression des Elastomerelements (252) in axialer Richtung [mm].

Der Quotient aus dem Volumen sämtlicher Elastomerelements (252) und dem Produkt aus der minimalen Querschnittsfläche der Verbindung (71) im ungedrosselten Zustand und der gewählten Höhenreduzierung des Elastomerelements (252) beim Erreichen einer Hubendlage des Kolbens (52) ist größer als 15 und kleiner als 200. In dem in den Figuren 1 - 16 und 19 dargestellten Ausführungsbeispiel hat der Quotient bei der sich aus der genannten Restlänge ergebenden Kompression den Wert 23. Selbst bei Betrieb des Feder-Dämpfer-Systems (10) ohne Drosselwiderstände wird die Gefahr einer Beschädigung beim Auftreten plötzlicher stoßartiger Belastungen wirksam vermindert.

Die Figur 20 zeigt einen Hydraulikplan des Feder-Dämpfer-Systems (10). Der Federenergiespeicher (20) und die Zylinder-Kolben-Einheit (50) sind parallel zueinander geschaltet. Anstatt der hier dargestellten Gasfeder (21) kann auch eine mechanische Feder, z.B. eine Schraubendruckfeder, eingesetzt werden. In der schematischen Darstellung der Figur 20 ist in der Gasfeder (21) der Druckraum (25) links und der Unterdruckraum (24) rechts dargestellt.

Die Gasfeder (21) hat im dargestellten Schema einen Gasfederzylinder (26) und einen relativ hierzu beweglichen Gasfederkolben (27). Im dargestellten Schema sind der Gasfederzylinder (26) und der Zylinder (51) der Zylinder-Kolben-Einheit (50) starr miteinander verbunden. Der Gasfederzylinder (26) wird im Ausführungsbeispiel der Figuren 1 - 16 und 19 durch den Zylinder (51) der Zylinder-Kolben-Einheit (50) gebildet. Er begrenzt den Druckraum (25) und den Unterdruckraum (24). Der relativ hierzu bewegliche Gasfederkolben (27) ist im genannten Ausführungsbeispiel die Topfbaugruppe (31). Die Topfbaugruppe (31) ist gemeinsam mit dem Kolben (52) der Zylinder-Kolben-Einheit (50) relativ zum Zylinder (51) der Zylinder- Kolben-Einheit (50) verschiebbar. Die beim Fahrbetrieb auftretenden äußeren Kräfte greifen damit im dargestellten Schema an der Verbindungsstange (28) des Kolbens (52) und des Gasfederkolbens (27) an.

In der Zylinder-Kolben-Einheit (50) ist der erste Verdrängungsraum (57) links dargestellt. Der zweite Verdrängungsraum (58) liegt auf der rechten Seite der Darstellung. Beim Einfedern wird im Schema eine von außen wirkende Kraft auf die Verbindungsstange (28) aufgebracht. Sowohl der Druckraum (25) der Gasfeder (21) als auch der erste Verdrängungsraum (57) der Zylinder-Kolben-Einheit (50) werden komprimiert. Der zweite Verdrängungsraum (58) der Zylinder-Kolben-Einheit (50) und der Unterdruckraum (24) der Gasfeder (21) werden expandiert.

Beim Ausfedern wird im Schema der Figur 20 eine nach außen wirkende Kraft auf die Verbindungsstange (28) aufgebracht. Der zweite Verdrängungsraum (58) und der Unterdruckraum (24) werden komprimiert. Der erste Verdrängungsraum (57) und der Druckraum (25) werden expandiert.

Der erste Verdrängungsraum (57) und der zweite Verdrängungsraum (58) sind mittels der Verbindungsleitung (72) hydraulisch verbunden. Diese Verbindungsleitung (72) ist außerhalb der Verdrängungsräume (57, 58) angeordnet. In der Verbindungsleitung (72) sitzt das Schaltventil (111). Dieses Schaltventil (111) ist manuell betätigbar. Es ist zwischen zwei z.B. stabilen Schaltzuständen schaltbar. Im zweiten Schaltzustand (113), der bidirektionalen Durchflussstellung (113), wird der bidirektionaler Volumenstrom zwischen dem ersten Verdrängungsraum (57) und dem zweiten Verdrängungsraum (58) ermöglicht. Im ersten Schaltzustand (112), der unidirektionalen Durchflussstellung (112), wird nur ein unidirektionaler Volumenstrom ermöglicht. Im Ausführungsbeispiel wird in dieser ersten Schaltstellung (112) der Volumenstrom vom zweiten Verdrängungsraum (58) in Richtung des ersten Verdrängungsraum (57) freigeschaltet.

An der Verbindungsleitung (72) ist der Ausgleichsspeicher (101) angeordnet. Der Ausgleichsspeicher (101) hat eine kompressible Ausgleichsvorrichtung (104), z.B. den Ausgleichskörper (103). Die Ausgleichsvorrichtung (104) gleicht die sich aufgrund der unterschiedlichen Querschnitte ergebenden unterschiedlichen Volumenänderungen im ersten Verdrängungsraum (57) und im zweiten Verdrängungsraum (58) aus.

Im Ausführungsbeispiel sind zwischen dem ersten Verdrängungsraum (57) und dem Ausgleichsspeicher (101) in der Verbindungsleitung (72) ein einstellbares Stromventil (123) und ein parallel hierzu geschaltetes Rückschlagventil (127) angeordnet. Das Stromventil (123) ist das einstellbare Drosselventil (123). Das Rückschlagventil (127) sperrt in Richtung des ersten Verdrängungsraums (57). Das Rückschlagventil (127) öffnet bei einem Volumenstrom vom zweiten Verdrängungsraum (58) in Richtung des ersten Verdrängungsraums (57).

In der Verbindungsleitung (72) sitzt zwischen dem zweiten Verdrängungsraum (58) und dem Ausgleichsspeicher (101) im Ausführungsbeispiel ebenfalls ein einstellbares Stromventil (133) in der Bauform eines einstellbaren Drosselventils (133). Parallel zu diesem einstellbaren Drosselventil (133) ist ein Rückschlagventil (137) geschaltet. Dieses Rückschlagventil (137) sperrt in Richtung des zweiten Verdrängungsraums (58). Es öffnet bei einem Volumenstrom vom ersten Verdrängungsraum (57) in Richtung des zweiten Verdrängungsraums (58). Damit sperrt in der Verbindungsleitung (72) das jeweils hochdruckseitige Rückschlagventil (127; 137). Im Ausführungsbeispiel ist das Rückschlagventil (127; 137) in das jeweilige einstellbare Drosselventil (123; 133) integriert.

Beim Fahrbetrieb wird beispielsweise beim Einfedern der Federenergiespeicher (20) komprimiert und dabei geladen. Das hydraulische Fluid wird mittels des Kolbens (52) aus dem ersten Verdrängungsraum (57) durch das erste einstellbare Drosselventil (123) hindurch zum Ausgleichsspeicher (101) gefördert. Außerdem wird es sowohl durch das zweite Rückschlagventil (137) als auch durch das zweite einstellbare Drosselventil (133) hindurch in Richtung des zweiten Verdrängungsraums (58) verdrängt. Beim Ausfedern - der Federenergiespeicher (20) wird entladen - erfolgt der Volumenstrom des hydraulischen Fluides durch das zweite einstellbare Drosselventil (133), das erste Rückschlagventil (127) und das erste einstellbare Drosselventil (123) in Richtung des ersten Verdrängungsraums (57). Hierbei kann hydraulisches Fluid aus dem Ausgleichsspeicher (101) mitgenommen werden.

Das Feder-Dämpfer-System (10) kann ohne die einstellbaren Stromventile (123, 133) und die Rückschlagventile (127, 137) ausgebildet sein. Auch der Einsatz einer konstanten Drossel ist denkbar.

Parallel zu jedem der Stromventile (123; 133) ist ein Druckventil (211; 221) geschaltet. Das einzelne Druckventil (211; 221) ist jeweils ein druckabhängiger Mengenregler (211; 221). Die beiden druckabhängigen Mengenregler (211; 221) sind gegenläufig orientiert. Die beiden druckabhängigen Mengenregler (221; 221) sind in einem gemeinsamen Gehäuse (141) der Ventilbaugruppe (140) angeordnet.

Bei unbelastetem Feder-Dämpfer-System (10) sind beide druckabhängige Mengenregler (211; 221) in beide Strömungsrichtungen geschlossen. Bei einem schlagartigen Einfedern, z.B. bei einer Geländefahrt, wird der erste Verdrängungsraum (57) komprimiert. Hydraulisches Fluid wird mit hohem Druck aus dem ersten Verdrängungsraum (57) in Richtung des zweiten Verdrängungsraums (58) verdrängt. Dieser Druck steht als hochdruckseitiger Druck an dem ersten druckabhängigen Mengenregler (211) an. Die Öffnung des druckabhängigen Mengenreglers (211) ist abhängig von der gewählten Federkonstante des Federpakets (212). Das Öffnungsverhalten des druckabhängigen Mengenreglers (211) ist stetig. Das hydraulische Fluid wird nach dem Öffnen des druckabhängigen Mengenreglers (211) vom ersten Medienzulauf (152) zum Medienauslauf (154) geleitet. Der zweite druckabhängige Mengenregler (221) bleibt geschlossen. Vom Medienauslauf (154) gelangt das hydraulische Fluid sowohl zum Ausgleichsbehälter (101) als auch durch das zweite Rückschlagventil (137) und die zweite einstellbare Drossel (133) in Richtung des zweiten Verdrängungsraums (58).

Bei einem schlagartigen Ausfedern des Feder-Dämpfer-Systems (10) wird hydraulisches Fluid aus dem zweiten Verdrängungsraum (58) in Richtung des ersten Verdrängungsraums (57) verdrängt. Das hydraulische Fluid wird durch den zweiten Medienzulauf (153) in den Verteilraum (195) gepresst. In diesem Fall wird der zweite druckabhängige Mengenregler (221) geöffnet. Der erste druckabhängige Mengenregler (211) bleibt geschlossen. Das hydraulische Fluid wird in diesem Fall über den Medienauslauf (154), das erste Rückschlagventil (127) und das erste einstellbare Drosselventil (123) in Richtung des ersten Verdrängungsraums (57) verdrängt. Das Feder-Dämpfer-System (10) kann mit einem einzelnen druckabhängigen Mengenregler (211; 221) ausgebildet sein, der dann nur in einer der Verdrängungsrichtungen wirkt. Es ist auch denkbar, das Feder-Dämpfer-System (10) ohne druckabhängigen Mengenregler (211; 221) auszubilden.

An der Kanalmündung (73) ist im Schema der Figur 20 ein kolbenhubabhängiges Drosselrückschlagventil (96) dargestellt. Diese schaltet zwischen einem ersten Zustand, in dem der Hydraulikstrom über das Drosselrückschlagventil (96) läuft und einem zweiten Zustand, in dem das Drosselrückschlagventil (96) unwirksam ist.

Das Drosselrückschlagventil (96) hat eine Drossel (97) und ein parallel hierzu geschaltetes Rückschlagventil (98). Die Drossel (97) wird durch die Wendelnut (91) am Kolben (52) und die Zylinderinnenwandung (59) gebildet. Das Rückschlagventil (98) wird durch das Kolbenrückschlagventil (95) gebildet. Das Rückschlagventil (98) sperrt gegen einen Volumenstrom vom zweiten Verdrängungsraum (58) in Richtung des ersten Verdrängungsraums (57).

Vor dem Beginn des Einfederns liegt der Kolben (52) z.B. in der Grundstellung (14) am Zylinderkopf (86) an. Die Kanalmündung (73) und der Umlaufkanal (68) liegen z.B. in einer Normalenebene zur Längsrichtung (15), die in dieser Hubstellung die Wendelnut (91) schneidet. Das beim Einfedern aus dem ersten Verdrängungsraum (57) verdrängte hydraulische Fluid wird durch die Drossel (97) und das Rückschlagventil (98) in die Restspalte zwischen dem Kolben (52) und dem Zylinder (51) gepresst. Hierbei vergrößert u.a. das an der Kolbenstirnfläche (93) aus dem Kolbenkanal (92) austretende hydraulische Fluid diese Restspalte. Der Hub des Kolbens (52) wird durch das in den zweiten Verdrängungsraum (58) nachfließende hydraulische Fluid unterstützt. Sobald der sich in Richtung des ersten Verdrängungsraums (57) bewegende Kolben (52) die Ebene des Umlaufkanals (68) verlassen hat, ist das Drosselrückschlagventil (96) wirkungslos.

Beim Ausfedern wird der Kolben (52) in Richtung des Zylinderkopfes (86) bewegt. Hydraulisches Fluid aus dem zweiten Verdrängungsraum (58) wird über die Verbindungsleitung (72) in Richtung des ersten Verdrängungsraums (57) verdrängt. Sobald der Kolben (52) bei dieser Hubbewegung die Ebene des Umlaufkanals (68) erreicht, wird die Drossel (97) wirksam. Das aus dem zweiten Verdrängungsraum (58) verdrängte Fluid wird durch die Wendelnut (91) gepresst und verzögert die Hubbewegung des Kolbens (52). Das Rückschlagventil (98) sperrt. Das Drosselrückschlagventil (96) bildet damit eine Endlagendämpfung für die Hubbewegung des Kolbens (52). Auch eine andere Ausbildung eines Drosselrückschlagventils (96) ist denkbar. Das Feder-Dämpfer-System (10) kann ohne Drosselrückschlagventil (96) ausgebildet sein.

In jeder Hubstellung des Kolbens (52) kann das Schaltventil (111) von der bidirektionalen Durchflussstellung (113) in die unidirektionale Durchflussstellung (112) geschaltet werden. Damit wird das weitere Einfedern des Feder-Dämpfer-Systems (10) blockiert. Der sich entspannende Federenergiespeicher (20) vergrößert den Druckraum (25). Hierbei wird in der Zylinder-Kolben-Einheit (50) der Kolben (52) relativ zum Zylinder (51) in Richtung des zweiten Verdrängungsraums (58) verschoben. Aus dem zweiten Verdrängungsraum (58) wird hydraulisches Fluid über die Verbindungsleitung (72) in den ersten Verdrängungsraum (57) verdrängt. Dies erfolgt so lange, bis der Federenergiespeicher (20) entladen ist und/oder der Kolben (52) seine Hubendlage am Zylinderkopf (86), z.B. in der Grundstellung (14), erreicht hat. In oder nahe dieser Hubendlage wird der Ausgleichskanal (39) geöffnet, sodass eine Druckdifferenz z.B. zwischen Druckraum (25) und dem Unterdruckraum (24) oder zwischen der Umgebung (1) und dem Unterdruckraum (24) verringert wird.

Die Figuren 21 - 23 zeigen ein Feder-Dämpfer-System (310) eines Zweiradfahrzeuges in der Bauform eines Gabeldämpfers (311). Dieses Feder-Dämpfer-System (310) hat eine Zylinder-Kolben-Einheit (350) und einen Federenergiespeicher (320). In diesem Ausführungsbeispiel ist der Federenergiespeicher (320) als Gasfeder (321), z.B. als Luftfeder, ausgebildet. Die z.B. hydraulische Zylinder-Kolben-Einheit (320) und der Federenergiespeicher (320) sind parallel zueinander geschaltet. Der Federenergiespeicher (320) ist beispielsweise in einem linken Gabelbein (312) und die Zylinder-Kolben-Einheit (350) in einem rechten Gabelbein (313) angeordnet. Die Zylinder (326, 351) der Zylinder-Kolben-Einheit (350) und des Federenergiespeichers (320) sind mittels der Gabelbrücke- (314) starr miteinander verbunden. Eine Verbindung zwischen den relativ hierzu bewegten Teilen des Federenergiespeichers (320) und der Zylinder-Kolben-Einheit (350) wird durch die hier nicht dargestellte Achse des Laufrads gebildet.

Bei einem Einfedern werden beide Gabelbeine (312, 313) verkürzt. Hierbei wird sowohl der Federenergiespeicher (320) komprimiert als auch hydraulisches Fluid aus einem ersten Verdrängungsraum (357) der Zylinder-Kolben-Einheit (350) in einen zweiten Verdrängungsraum (358) gefördert. Im dargestellten Ausführungsbeispiel erfolgt der Hydrauilkfluss durch eine hydraulische Verbindung (371) durch zwei Kolbenventile (353). Der minimale Durchmesser einer einzelnen Kolbendurchgangsbohrung beträgt z.B. 1,2 Millimeter. Es ist auch denkbar, einen durchgangslosen Kolben (352) und eine außerhalb der Verdrängungsräume (357, 358) angeordnete Verbindungsleitung einzusetzen. In dieser Verbindungsleitung kann ein Schaltventil angeordnet sein, das z.B. so ausgebildet ist wie im Zusammenhang mit dem ersten Ausführungsbeispiel beschrieben.

Der in diesem Ausführungsbeispiel dargestellte Ausgleichsspeicher (372) ist innerhalb des Zylinders (350) im Gabelbein (312) angeordnet. Der Ausgleichsspeicher (372) kann jedoch auch an die genannte Verbindungsleitung angeschlossen sein. In der Verbindungsleitung können auch einstellbare Drosselventile und parallel hierzu geschaltete Rückschlagventile vorgesehen sein, wie im Zusammenhang mit dem ersten Ausführungsbeispiel beschrieben. Auch der Einsatz einer z.B. austauschbaren Ventilbaugruppe ist denkbar. Diese kann so ausgebildet sein, wie im Zusammenhang mit dem ersten Ausführungsbeispiel beschrieben.

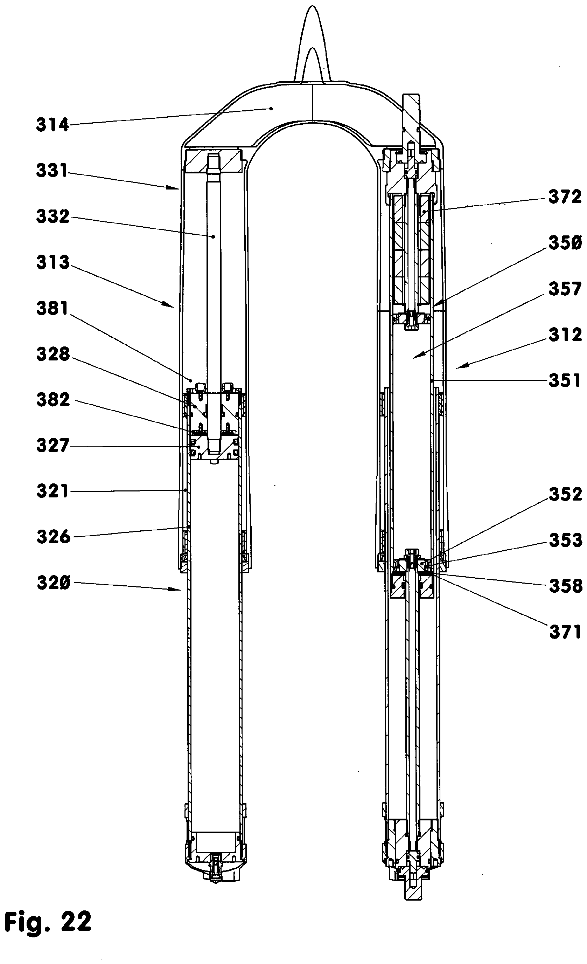

Der Federenergiespeicher (320) hat in diesem Ausführungsbeispiel eine Topfbaugruppe (331), die mittels einer Federkolbenstange (332) einen Gasfederkolben (327) trägt. Der Gasfederkolben (327) ist im Gasfederzylinder (326) geführt, der relativ zum Topfbaugruppe (331) verfahrbar ist. Die Topfbaugruppe (331) umgreift den Gasfederzylinder (326). Die Figuren 21 und 22 zeigen den Gabeldämpfer (311) in einer ausgefahrenen Endlage.

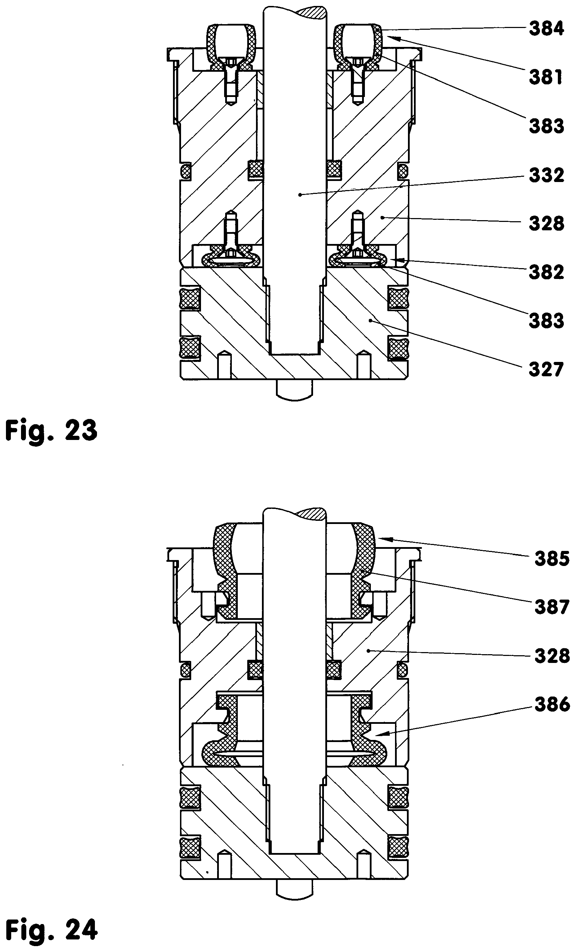

Die Federkolbenstange (332) durchdringt einen Federzylinderkopf (328) des Federzylinders (326). Der Federzylinderkopf (328) trägt in diesem Ausführungsbeispiel beidseitig jeweils zwei Endlagenanschläge (381, 382). Die in den Darstellungen der Figuren 22 und 23 obenliegenden Endlagenanschläge (381) sind unverformt. Die innerhalb des Gasfederzylinders (326) angeordneten Endlagenanschläge (382) sind im verformten Zustand dargestellt. Sie liegen mit ihrem Topf (383) am Gasfederkolben (327) an. Der einzelne Endlagenanschlag (381; 382) ist beispielsweise so aufgebaut, wie im Zusammenhang mit dem ersten Ausführungsbeispiel beschrieben. Jeder der Endanschläge (381, 382) weist ein Elastomerelement (384) auf. Für das in diesem Ausführungsbeispiel beschriebene Feder-Dämpfer-System (10) hat der oben beschrieben Quotient aus dem Volumen sämtlicher Endlagenanschläge (381; 382), dem minimalen Querschnitt der hydraulischen Verbindung (71; 371) bei einer gewählten Kompression von 3 Millimetern den Wert 25.

Beim Einfedern des Feder-Dämpfer-Systems (10) wird der Hub durch die obenliegenden Endlagenanschläge (381) begrenzt. In der eingefahrenen Endlage stoßen diese z.B. an die Topfbaugruppe (331).

Die Figur 24 zeigt eine Variante der Ausbildung und der Anordnung der Endlagenanschläge (385; 386). Auch diese Endlagenanschläge (385, 385) haben jeweils einen Elastomerelement (387). Der einzelne Endlagenanschlag (385; 386) umgreift die Federkolbenstange (332) in radialer Richtung. Die Höhe des einzelnen Endlagenanschlags (385; 386) beträgt beispielsweise das 2,3-fache der in den Figuren 23 dargestellten Endlagenanschläge (381, 382). Der unverformte Durchmesser beträgt das 3,4-fache des Durchmessers der oben beschriebenen Endlagenanschläge (381, 382). Die Daten des Werkstoffs und der Härte der Endlagenanschläge (385, 386) dieses Ausführungsbeispiels entsprechen den Daten der vorhergehenden Ausführungsbeispiele. Der maximale Hub entspricht beispielsweise der Hälfte der unverformten Höhe des einzelnen Endlagenanschlags (385, 386). Die Energieaufnahme beträgt beispielsweise bis zu 10 Joule pro Hub. Bei einer Kompression von 9 Millimetern, das sind 58 % der Ausgangslänge, erreicht der nach oben genannter Formel ermittelte Quotient in diesem Ausführungsbeispiel einen Wert von 63.

Auch Kombinationen der einzelnen Ausführungsbeispiele sind denkbar.

Bezugszeichenliste:

1    Umgebung

10    Feder-Dämpfer-System
11    Hinterbaudämpfer
12    Schwenkauge
13    Schwenkauge
14    Grundstellung
15    Längsrichtung
16    Laststellung
17    Hubrichtung, Einfahr-Hubrichtung
18    Hubrichtung, Ausfahr-Hubrichtung

20    Federenergiespeicher
21    Gasfeder
22    Kopfring
23    Dichtelement
24    Unterdruckraum
25    Druckraum
26    Gasfederzylinder
27    Gasfederkolben
28    Verbindungsstange

31    Topfbaugruppe
32    Abstreifdichtung, Abstreifer
33    Quadring, Dichtelement
34    Pneumatikanschluss
35    Kopfbereich; Kopfteil
37    Topfboden
38    Topfmantel
39    Ausgleichskanal

41    Volumenscheiben
50    Zylinder-Kolben-Einheit
51    Zylinder
52    Kolben
53    Kolbenstange
54    Zylinderkopfdeckel
55    Zylinderinnenraum
56    Zylinderboden
57    erster Verdrängungsraum
58    zweiter Verdrängungsraum
59    Zylinderinnenwandung

61    Zylinderbaugruppe
62    Zylinderkörper
63    Mantelfläche
64    Dichtung
65    Außengewinde an (54)
66    Zylindersockel
67    Zylindermantel
68    Umlaufkanal
69    Innengewinde für (140)

71    hydraulische Verbindung

| | |
|---|---|
| 72 | Verbindungsleitung |
| 73 | Kanalmündung |
| 74 | Bodendurchbruch |
| 75 | Bodendurchbruch |
| 76 | Schaltkanal |
| 77 | Aufnahmebohrung von (121) |
| 78 | erster Kanal |
| 79 | Ausgleichsleitung |
| 81 | Querleitung |
| 82 | Mantelseitiger Abschnitt von (72) |
| 83 | hydraulische Verbindung |
| 84 | Anschlussfläche für (140) |
| 85 | Bohrungen in (84) |
| 86 | Zylinderkopf |
| 87 | Befüll- und Entlüftungsverschluss |
| 91 | Wendelnut |
| 92 | Kolbenkanal |
| 93 | Stirnfläche von (91) |
| 94 | Rückschlagelement |
| 95 | Kolbenrückschlagventil |
| 96 | Drosselrückschlagventil |
| 97 | Drossel |
| 98 | Rückschlagventil |
| 101 | Ausgleichsspeicher |
| 102 | Ausgleichsraum |
| 103 | Ausgleichskörper |
| 104 | Ausgleichsvorrichtung |
| 111 | Schaltventil |
| 112 | erste Schaltstellung von (111), unidirektionale Schaltstellung, unidirektionale Durchflussstellung |
| 113 | zweite Schaltstellung von (111), bidirektionale Schaltstellung, bidirektionale Durchflussstellung |
| 114 | Rückschlagventil |
| 115 | Schaltwelle |
| 116 | Schalter |
| 121 | erste Einstellventileinheit |
| 122 | Drehknopf |
| 123 | Drosselelement, einstellbares Drosselventil, einstellbares Stromventil |
| 124 | Einstellwelle |
| 125 | Drosselkanal |
| 126 | Rückschlagelement, Kugel |
| 127 | Rückschlagventil |
| 128 | Innenkanal |
| 131 | zweite Einstellventileinheit |
| 132 | Drehknopf |
| 133 | Drosselelement, einstellbares Drosselventil, einstellbares Stromventil |
| 134 | Einstellwelle |
| 135 | Innenkanal |
| 136 | Rückschlagelement |
| 137 | Rückschlagventil |
| 140 | Ventilbaugruppe |
| 141 | Gehäuse |
| 142 | Außengewinde |

| 143 | Mantel |
|---|---|
| 144 | Stirnseite, Montageseite |
| 145 | Stirnseite, Anschlussseite |
| 146 | Stiftaufnehmen |
| 147 | Mittellinie |
| 148 | Dichtring |
| 149 | Dichtring |

| 151 | Dichtring |
|---|---|
| 152 | Medienzulauf, erster Medienzulauf |
| 153 | Medienzulauf, zweiter Medienzulauf |
| 154 | Medienauslauf |
| 155 | Ventilraum |
| 156 | Befestigungszapfen |
| 157 | Dichtringe |

| 161 | Bodenteil |
|---|---|
| 162 | Aufnahmezapfen |
| 163 | Anschlussflansch |
| 164 | Bodenteilmantel |
| 165 | Anschlussseite |
| 166 | Dichtring-Aufnahmenut |
| 167 | Dichtring-Aufnahmenut |
| 168 | Dichtring-Aufnahmenut |
| 169 | Durchgangsbohrungen |

| 171 | Durchgangsbohrungen |
|---|---|
| 172 | Aufnahmezapfenbohrung |
| 173 | Auflagefläche |
| 174 | Abschnitt von (162) |
| 175 | Abschnitt von (162) |
| 176 | Dichtring |

| 181 | Innendeckel |
|---|---|
| 182 | Zentrierhülse |
| 183 | Deckelscheibe |
| 184 | Auflagefläche |
| 185 | Durchbrüche |
| 186 | Durchgangsbohrung |
| 187 | Zentrierring |

| 191 | Deckelteil |
|---|---|
| 192 | Umfangsfläche |
| 194 | Gewindering |
| 195 | Verteilraum |
| 196 | Ringdichtelement |
| 197 | Auflagefläche |

| 201 | Zwischenscheibe, Zwischenring |
|---|---|
| 202 | Radialbohrungen |
| 211 | Druckventil, druckabhängiger Mengenregler |
| 212 | Federpaket |
| 213 | Federscheiben |
| 214 | Federscheiben |
| 215 | Abstandsscheiben |

| 221 | Druckventil, druckabhängiger Mengenregler |
|---|---|
| 222 | Federpaket |

231 erste Strömungsrichtung
232 zweite Strömungsrichtung

251 Endlagenanschläge
252 Elastomerelement
253 Befestigungsbereich
254 Verformungsbereich

310 Feder-Dämpfer-System
311 Gabeldämpfer
312 Gabelbein rechts
313 Gabelbein links
314 Gabelbrücke

320 Federenergiespeicher
321 Gasfeder
326 Zylinder, Gasfederzylinder
327 Gasfederkolben
328 Federzylinderkopf

331 Topfbaugruppe
332 Federkolbenstange

350 Zylinder-Kolben-Einheit
351 Zylinder
352 Kolben
353 Kolbenventile
357 erster Verdrängungsraum
358 zweiter Verdrängungsraum

371 hydraulische Verbindung
372 Ausgleichsspeicher

381 Endlagenanschläge
382 Endlagenanschläge
383 Topf
384 Elastomerelement
385 Endlagenanschlag
386 Endlagenanschlag
387 Elastomerelement

**Patentansprüche**

1. Feder-Dämpfer-System (10; 310) mit einem Federenergiespeicher (20; 320) und mit einer hierzu parallel geschalteten hydraulischen Zylinder-Kolben-Einheit (50; 350), die einen Zylinder (51; 351) und einen innerhalb des Zylinders (51; 351) verschiebbaren, einen ersten Verdrängungsraum (57; 357) gegen einen zweiten Verdrängungsraum (58; 358) abgrenzenden Kolben (52; 352) hat, **dadurch gekennzeichnet,**

   - **dass** eine außerhalb der Verdrängungsräume (57, 58; 357, 358) angeordnete hydraulische Verbindungsleitung (72) den ersten Verdrängungsraum (57; 357) und den zweiten Verdrängungsraum (58; 358) miteinander verbindet,
   - **dass** an der Verbindungsleitung (72) ein Ausgleichsspeicher (101; 372) angeordnet ist und
   - **dass** zumindest zwischen einem der Verdrängungsräume (57; 58; 357; 358) und dem Ausgleichsspeicher (101; 372) ein einstellbares Drosselventil (123; 133) und ein parallel zu diesem geschaltetes, hochdruckseitig sperrendes Rückschlagventil (127; 137) angeordnet ist.

2. Feder-Dämpfer-System (10; 310) nach Anspruch 1, **dadurch gekennzeichnet, dass** sowohl zwischen dem ersten Verdrängungsraum (57; 357) und dem Ausgleichsspeicher (101; 372) als auch zwischen dem zweiten Verdrängungsraum (58; 358) und dem Ausgleichsspeicher (101; 372) jeweils ein einstellbares Drosselventil (123; 133) und ein parallel zu diesem geschaltetes Rückschlagventil (127; 137) angeordnet ist, wobei jeweils das hochdruckseitige Rückschlagventil (127; 137) sperrt.

3. Feder-Dämpfer-System (10; 310) nach Anspruch 1, **dadurch gekennzeichnet, dass** in der Verbindungsleitung (72) ein Schaltventil (111) angeordnet ist, das zwischen einer bidirektionalen Durchflussstellung (113) und einer unidirektionalen Durchflussstellung (112) umschaltbar ist, sodass bei Stellung des Schaltventils (111) in der unidirektionalen Durchflussstellung (112) der sich entladende Federenergiespeicher (20; 320) das Feder-Dämpfer-System (10; 310) in eine Grundstellung (14) versetzt.

4. Feder-Dämpfer-System (10; 310) nach Anspruch 1, **dadurch gekennzeichnet, dass** parallel zu jedem der einstellbaren Drosselventile (123; 133) und dem jeweiligen Rückschlagventil (127; 137) ein hochdruckseitig betätigbares Druckventil (211; 221) angeordnet ist.

5. Feder-Dämpfer-System (10; 310) nach Anspruch 4, **dadurch gekennzeichnet, dass** die beiden Druckventile (211; 221) gemeinsam in einer Ventilbaugruppe (140) angeordnet sind, wobei die Ventilbaugruppe (140) an einem die Verdrängungsräume (57, 58; 357, 358) begrenzenden Zylinderkörper (62) lösbar befestigt ist.

6. Feder-Dämpfer-System (10; 310) nach Anspruch 1, **dadurch gekennzeichnet, dass** es zumindest in einem an eine der Endlagen des Kolbenhubs angrenzenden Teilhub des Kolbens (52) ein kolbenhubabhängiges Drosselrückschlagventil (96) aufweist.

7. Feder-Dämpfer-System (10; 310) nach Anspruch 1, **dadurch gekennzeichnet, dass** der Ausgleichsspeicher (101; 372) in einem Zylindermantel (67) des Zylinderkörpers (62) angeordnet ist.

8. Feder-Dämpfer-System (10; 310) nach Anspruch 1, **dadurch gekennzeichnet, dass** die Verbindungsleitung (72) innerhalb des Zylinderkörpers (62) angeordnet ist.

9. Zweiradfahrzeug mit einem Feder-Dämpfer-System (10; 310) nach Anspruch 1.

10. Zweiradfahrzeug nach Anspruch 9, **dadurch gekennzeichnet, dass** das Feder-Dämpfer-System (10) als Hinterbaudämpfer (11) ausgebildet ist.

Fig. 1

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**168**
**171**
**167**
**169**
**166**
**162**
**172**
**174**
**175**
**173**
**161**

**191**   **192**

**Fig. 13**

**Fig. 12**

**185**
**187**
**186**
**181**
**183**
**182**

**Fig. 14**

**Fig. 15**

**202**   **201**

**215**
**212, 222**
**213**
**214**

**Fig. 16**

**Fig. 17**

**Fig. 18**

**Fig. 19**

**Fig. 20**

**Fig. 21**

**Fig. 22**

**384**

**381**

**383**

**332**

**328**

**382**

**383**

**327**

**Fig. 23**

**385**

**387**

**328**

**386**

**Fig. 24**

Europäisches
Patentamt

European
Patent Office

Office européen
des brevets

# EUROPÄISCHER RECHERCHENBERICHT

**Nummer der Anmeldung**

**EP 23 00 0096**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2010/018818 A1 (ISHII ATSUSHI [SE] ET AL) 28. Januar 2010 (2010-01-28) | 1,2,4, 8-10 | INV. F16F9/46 |
| Y | * Zusammenfassung; Abbildungen 1, 2 * * Absatz [0032] - Absatz [0040] * ----- | 6 | F16F9/06 F16F9/34 F16F9/56 |
| X | DE 10 2016 112794 A1 (GM GLOBAL TECH OPERATIONS LLC [US]) 19. Januar 2017 (2017-01-19) * Zusammenfassung; Abbildungen 1-18 * * Absätze [0031], [0041], [0051], [0053] und [0065]-[0069] * ----- | 1-3,7-10 | B62K25/08 B62K25/28 ADD. F16F9/48 F16F9/49 F16F9/58 |
| X | US 2015/211595 A1 (IKEDA DAISUKE [JP]) 30. Juli 2015 (2015-07-30) * Zusammenfassung; Abbildungen 1, 2, 5-7B * * Absatz [0114] * * Absatz [0116] * * Absatz [0145] - Absatz [0155] * ----- | 1,2,4,5, 8,9 | F16F9/00 F16F13/00 B62K25/04 |
| Y | US 2020/072312 A1 (DOBINSON ADAM REGINALD [AU] ET AL) 5. März 2020 (2020-03-05) * Zusammenfassung; Abbildungen 1-3 * * Absatz [0068] - Absatz [0069] * * Absatz [0076] - Absatz [0085] * ----- | 6 | **RECHERCHIERTE SACHGEBIETE (IPC)** F16F B60G |
| A | DE 10 2006 009759 A1 (MAGENWIRTH GMBH & CO KG GUSTAV [DE]) 6. September 2007 (2007-09-06) * Zusammenfassung; Abbildungen 1, 2 * * Absatz [0002] - Absatz [0006] * * Absatz [0026] - Absatz [0031] * ----- | 3 | |
| A | EP 2 058 155 B1 (BAE SYSTEMS HÄGGLUNDS AKTIEBOLAG [SE]) 24. Februar 2016 (2016-02-24) * Zusammenfassung; Abbildungen 1-7b * ----- | 3 | |

Der vorliegende Recherchenbericht wurde für alle Patentansprüche erstellt

| Recherchenort | Abschlußdatum der Recherche | Prüfer |
|---|---|---|
| Den Haag | 12. Dezember 2023 | Maroño Martínez, J |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
...............................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.**

EP 23 00 0096

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-12-2023

| Im Recherchenbericht angeführtes Patentdokument | Datum der Veröffentlichung | Mitglied(er) der Patentfamilie | Datum der Veröffentlichung |
|---|---|---|---|
| US 2010018818 A1 | 28-01-2010 | EP 2118515 A1 | 18-11-2009 |
| | | US 2010018818 A1 | 28-01-2010 |
| | | WO 2008097183 A1 | 14-08-2008 |
| DE 102016112794 A1 | 19-01-2017 | CN 106352009 A | 25-01-2017 |
| | | DE 102016112794 A1 | 19-01-2017 |
| | | US 2017015172 A1 | 19-01-2017 |
| US 2015211595 A1 | 30-07-2015 | EP 2899110 A2 | 29-07-2015 |
| | | JP 6291266 B2 | 14-03-2018 |
| | | JP 2015140822 A | 03-08-2015 |
| | | US 2015211595 A1 | 30-07-2015 |
| US 2020072312 A1 | 05-03-2020 | AU 2019206063 A1 | 19-03-2020 |
| | | CN 110873144 A | 10-03-2020 |
| | | US 2020072312 A1 | 05-03-2020 |
| DE 102006009759 A1 | 06-09-2007 | CN 101370704 A | 18-02-2009 |
| | | DE 102006009759 A1 | 06-09-2007 |
| | | EP 1853479 A1 | 14-11-2007 |
| | | TW 200817230 A | 16-04-2008 |
| | | US 2010219607 A1 | 02-09-2010 |
| | | WO 2007101564 A1 | 13-09-2007 |
| EP 2058155 B1 | 24-02-2016 | EP 2058155 A1 | 13-05-2009 |
| | | ES 2565242 T3 | 01-04-2016 |
| | | PL 2058155 T3 | 31-08-2016 |
| | | SG 152999 A1 | 29-06-2009 |
| | | US 2009138157 A1 | 28-05-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2148112 A1